# EUROPÄISCHE PATENTSCHRIFT

(11) **EP 3 380 211 B1**
(45) Veröffentlichungstag und Bekanntmachung des Hinweises auf die Patenterteilung: **05.01.2022**
(21) Anmeldenummer: 16798089.5
(22) Anmeldetag: 17.11.2016
(51) Int. Cl.: B01D 35/147, B01D 35/153, B01D 35/16, B01D 27/10, B01D 29/96

(54) **FILTERKARTUSCHE FÜR EINEN ÖLFILTER EINES KRAFTWAGENS UND ÖLFILTER**
FILTER CARTRIDGE FOR A VEHICULE OIL FILTER AND OIL FILTER
CARTOUCHE DE FILTRE POUR DES FILTRES A HUILE POUR VEHICULE ET FILTRE A HUILE

(30) Priorität: 28.11.2015 DE 102015015370
(43) Veröffentlichungstag der Anmeldung: 03.10.2018
(73) Patentinhaber: Daimler AG, 70372 Stuttgart (DE)
(72) Erfinder: SANDER, Markus, 66663 Merzig (DE); LE CLECH, Lionel, 70193 Stuttgart (DE); SEEMÜLLER, Thomas, 71665 Ensingen (DE); SCHUMACHER, Eric, 55411 Bingen (DE); HOFFMANN, Michael, 71384 Weinstadt (DE); BOEHNING, Philipp, 70186 Stuttgart (DE); KNOLL, Kai, 70327 Stuttgart (DE)
(74) Vertreter: JENSEN & SON
(86) Internationale Anmeldenummer: PCT/EP2016/001914
(87) Internationale Veröffentlichungsnummer: WO 2017/088962

(56) Entgegenhaltungen:
- WO-A1-2005/007267
- WO-A1-2012/085193
- DE-A1-102009 054 523
- DE-A1-102012 210 834
- DE-B3-102012 000 876
- JP-A- 2004 346 929

## Beschreibung

Die Erfindung betrifft einen Ölfilter mit einem Ölfiltergehäuse, in welchem eine Filterkartusche angeordnet ist. Des Weiteren betrifft die Erfindung eine Filterkartusche zum Einsetzen in das Ölfiltergehäuse des Ölfilters eines Kraftwagens. Die Filterkartusche weist einen Kanal für gefiltertes Öl auf, welcher in radialer Richtung zumindest bereichsweise von einem Filtermaterial der Filterkartusche umgeben ist.

Die DE 10 2012 000 876 B3 beschreibt einen Ölfilter mit einem Filterkopf, an welchen ein Gehäusetopf angeschraubt ist, wobei in dem Gehäustetopf ein Filterelement angeordnet ist, welches bei geschlossenem Ölfilter in eine axiale Richtung des Filterelements nicht verschiebbar ist.

Die WO 2013/134841 A1 beschreibt eine Ölpumpe und einen Ölfilter für Verbrennungsmotoren. Hierbei ist in einem Zufuhrkanal für ungefiltertes Öl, über welchen das ungefilterte Öl hin zu einem Bereich des Ölfilters gelangt, in welchem sich eine Filtereinrichtung befindet, ein Rückschlagventil angeordnet. Beim Betrieb der Ölpumpe wird das Rückschlagventil geöffnet beziehungsweise aufgedrückt. Nach dem Abstellen der Ölpumpe drückt eine Feder des Rückschlagventils ein Dichtmittel gegen einen Ventilsitz. Dies verhindert, dass das Öl zurück in die Ölpumpe und somit in ein Kurbelgehäuse des Verbrennungsmotors gelangt. Darüber hinaus ist in dem Bereich des Filters, in welchem die Filtereinrichtung angeordnet ist, ein Entlastungsventil vorgesehen, welches dann öffnet, wenn die Filtereinrichtung verstopft ist.

Des Weiteren beschreibt die EP 2 644 242 A1 einen Ölfilter, bei welchem eine Filterkartusche in einem Ölfiltergehäuse angeordnet ist. Ein Sicherheitsventil öffnet, wenn das Filtermaterial der Filterkartusche verstopft ist. Hierbei ist ein Verschlusskörper des Sicherheitsventils Bestandteil der Filterkartusche. Eine Feder, welche am Ölfiltergehäuse angeordnet ist, drückt den Verschlusskörper des Sicherheitsventils gegen einen Ventilsitz, wenn die Filterkartusche in das Ölfiltergehäuse eingebaut und ein Deckel des Ölfiltergehäuses geschlossen ist.

Das aus dem Stand der Technik bekannte Rückschlagventil verhindert, dass bei einem Stopp des Verbrennungsmotors der Ölkreislauf leerläuft. Dem liegt die Erkenntnis zugrunde, dass alle Lager des Verbrennungsmotors mit Öl mit einem gewissen Druck zu beaufschlagen sind, damit die Schmierung der Lager gut funktioniert. Um jedoch einen entsprechenden Öldruck aufbauen zu können, ist es erforderlich, dass der Ölkreislauf mit Öl und nicht mit Luft befüllt ist. Ist kein Rückschlagventil vorgesehen, so bewirkt das Abstellen des Verbrennungsmotors, dass der Ölkreislauf größtenteils leerläuft. Das Rückschlagventil hilft also, auch bei einem Stopp des Verbrennungsmotors Ölvolumen im Ölkreislauf zu halten. Wenn nämlich aufgrund von Luft im Ölkreislauf der Öldruck nur verzögert aufgebaut werden kann, führt dies zu einer fehlenden oder mangelhaften Schmierung. Eine fehlende Schmierung kann jedoch zu Lagerschäden beziehungsweise zu Motorschäden führen. Eine mangelhafte Schmierung bedeutet einen höheren Verschleiß. Verschleißen Lager des Verbrennungsmotors, so führt dies zu einer Reduzierung der Lebensdauer des Verbrennungsmotors. Im schlimmsten Fall kann dies gar zu einem frühzeitigen Motorschaden führen.

Das Entlastungsventil oder Sicherheitsventil, welches auch als Bypassventil bezeichnet wird, öffnet jedoch bei verstopftem Filtermaterial einen Bypass. Das Öl durchströmt dann zwar nicht mehr das Filtermaterial, jedoch ist eine Notversorgung des Verbrennungsmotors zumindest mit ungefiltertem Öl gewährleistet.

Bei der Anordnung derartiger Ventile in aus dem Stand der Technik bekannten Ölfiltern ist üblicherweise vorgesehen, dass entweder der Ventilsitz oder der Ventilkolben beziehungsweise Ventilpilz an der Filterkartusche angebracht ist und der jeweilige Gegenpart am Ölfiltergehäuse. Das Vorsehen derartiger Ventile führt jedoch zu einer vergleichsweise großen Bauteilanzahl und einer vergleichsweise hohen Komplexität des Ölfilters.

Aufgabe der vorliegenden Erfindung ist es daher, eine Filterkartusche der eingangs genannten Art und einen Ölfilter mit einer solchen Filterkartusche zu schaffen, durch welche beziehungsweise bei welchem auf vereinfachte Art zumindest eine Ventilfunktion bereitgestellt ist.

Diese Aufgabe wird durch einen Ölfilter mit den Merkmalen des Patentanspruchs 1 und durch eine Filterkartusche mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Der erfindungsgemäße Ölfilter für einen Kraftwagen umfasst eine Filterkartusche und ein Ölfiltergehäuse, in welchem die Filterkartusche angeordnet ist. Die Filterkartusche weist einen Kanal für gefiltertes Öl auf. In radialer Richtung ist der Kanal zumindest bereichsweise von einem Filtermaterial der Filterkartusche umgeben. In einer Wandung des Kanals ist zumindest eine Durchtrittsöffnung ausgebildet. Das Ölfiltergehäuse umfasst einen Grundkörper und ein Deckelelement. Bei von dem Grundkörper abgenommenem Deckelelement kann die Filterkartusche aus dem Ölfiltergehäuse entfernt werden.

Des Weiteren ist die Filterkartusche in dem geschlossenen Ölfiltergehäuse, bei welchem das Deckelelement an den Grundkörper montiert ist, aus einer ersten Position, in welcher ein Eintreten von gefiltertem Öl über die zumindest eine Durchtrittsöffnung in einen auf Seiten des Ölfiltergehäuses vorgesehenen Kanal für das gefilterte Öl unterbunden ist, in eine zweite Position bewegbar. In der zweiten Position ist die Filterkartusche bezogen auf die erste Position in eine axiale Richtung der Filterkartusche verschoben. In der zweiten Position ist ein Einlass in den auf Seiten des Ölfiltergehäuses vorgesehenen Kanal mit der zumindest einen Durchtrittsöffnung fluidisch verbunden. So ist auf besonders einfache Weise im Zusammenwirken der Filterkartusche mit dem Ölfiltergehäuse ein Rückschlagventil bereitgestellt.

Die Filterkartusche weist ein relativ zu einer ersten Endplatte der Filterkartusche in die axiale Richtung der Filterkartusche verschiebbares Verschlusselement auf. Mittels des Verschlusselements ist ein Ablasskanal verschließbar, welcher zum Ablassen des Öls aus einem Aufnahmebereich des Ölfiltergehäuses für die Filterkartusche vorgesehen ist. Hierbei ist ein Einlass des Ablasskanals durch Verbringen der Filterkartusche in eine Demontageposition der Filterkartusche freigebbar. In der Demontageposition ist die Filterkartusche aus der ersten Position in eine der zweiten Position entgegengesetzte Richtung bewegt. Entsprechend ist durch das Verschlusselement im Zusammenwirken mit dem Ablasskanal ein Serviceventil bereitgestellt. Bei geöffnetem Serviceventil und somit freigegebenem Einlass des Ablasskanals kann bei einem Ölwechsel gewährleistet werden, dass das gesamte gebrauchte Öl aus dem Verbrennungsmotor abgelassen wird. So kann die Filterkartusche ohne eine Ölverschleppung gewechselt werden.

Die erfindungsgemäße Filterkartusche, welche in das Ölfiltergehäuse des Ölfilters eingesetzt werden kann, weist den Kanal für gefiltertes Öl auf. In radialer Richtung ist der Kanal zumindest bereichsweise von dem Filtermaterial der Filterkartusche umgeben. In der Wandung des Kanals ist die zumindest eine Durchtrittsöffnung ausgebildet. Durch Verbringen der Filterkartusche in die erste Position kann ein Eintreten von gefiltertem Öl über die zumindest eine Durchtrittsöffnung in den Kanal für das gefilterte Öl unterbunden werden, welcher auf Seiten des Ölfiltergehäuses vorgesehen ist. Durch Verbringen der Filterkartusche in die zweite Position, in welcher die Filterkartusche bezogen auf die erste Position in eine axiale Richtung der Filterkartusche verschoben ist, ist der Einlass in den auf Seiten des Ölfiltergehäuses vorgesehenen Kanal mit der zumindest einen Durchtrittsöffnung fluidisch verbindbar. In der ersten Position der Filterkartusche kann also das gefilterte Öl nicht die zumindest eine Durchtrittsöffnung in der Wandung des Kanals der Filterkartusche durchströmen und weiter in den auf Seiten des Ölfiltergehäuses vorgesehenen Kanal gelangen. Demgegenüber kann die fluidische Verbindung zwischen dem Kanal der Filterkartusche und dem auf Seiten des Ölfiltergehäuses vorgesehenen Kanal hergestellt werden, indem die Filterkartusche in die zweite Position verbracht wird. Bei fluidischer Verbindung der zumindest einen Durchtrittsöffnung mit dem Einlass des auf Seiten des Ölfiltergehäuses vorgesehenen Kanal kann dementsprechend das gefilterte Öl die zumindest eine Durchtrittsöffnung durchströmen und über den Einlass in den Kanal gelangen, welcher auf Seiten des Ölfiltergehäuses für das gefilterte Öl vorgesehen ist.

Die Filterkartusche weist das relativ zu der ersten Endplatte der Filterkartusche in die axiale Richtung der Filterkartusche verschiebbare Verschlusselement auf. Mittels des Verschlusselements ist der Ablasskanal verschließbar, welcher zum Ablassen des Öls aus dem Aufnahmebereich des Ölfiltergehäuses für die Filterkartusche vorgesehen ist. Hierbei ist der Einlass des Ablasskanals durch Verbringen der Filterkartusche in die Demontageposition der Filterkartusche freigebbar. In der Demontageposition ist die Filterkartusche aus der ersten Position in eine der zweiten Position entgegengesetzte Richtung bewegt. Entsprechend ist durch das Verschlusselement im Zusammenwirken mit dem Ablasskanal ein Serviceventil bereitgestellt. Bei geöffnetem Serviceventil und somit freigegebenem Einlass des Ablasskanals kann bei einem Ölwechsel gewährleistet werden, dass das gesamte gebrauchte Öl aus dem Verbrennungsmotor abgelassen wird. So kann die Filterkartusche ohne eine Ölverschleppung gewechselt werden.

Die Filterkartusche ist also in dem Ölfiltergehäuse in die axiale Richtung der Filterkartusche verschiebbar, welche mit der axialen Richtung des Kanals der Filterkartusche zusammenfällt. Diese Verschieberichtung entspricht des Weiteren einer Richtung, in welche beim Einbau der Filterkartusche in das Ölfiltergehäuse die Filterkartusche in das Ölfiltergehäuse eingesetzt oder eingeschoben wird.

Mit anderen Worten ist die Filterkartusche in dem Ölfiltergehäuse schwimmend gelagert. Dies bedeutet, dass die Filterkartusche entlang eines definierten Verfahrwegs oder Verschiebewegs axial in dem Ölfiltergehäuse bewegbar ist. Durch dieses Bewegen der Filterkartusche in die axiale Richtung kann dafür gesorgt werden, dass die zumindest eine Durchtrittsöffnung, welche in der Wandung des Kanals der Filterkartusche ausgebildet ist, mit dem Einlass in den auf Seiten des Ölfiltergehäuses vorgesehenen Kanal fluidisch verbunden wird. In dieser zweiten Position der Filterkartusche kann also das gefilterte Öl aus dem Kanal der Filterkartusche in den auf Seiten des Ölfiltergehäuses vorgesehenen Kanal für das gefilterte Öl eintreten. Befindet sich hingegen die Filterkartusche in der ersten Position, so ist die zumindest eine Durchtrittsöffnung in der Wandung des Kanals der Filterkartusche nicht von Öl durchströmbar. Entsprechend ist durch das Verbringen der Filterkartusche in die erste Position das Eintreten des gefilterten Öls in den auf Seiten des Ölfiltergehäuses vorgesehenen Kanal unterbindbar.

Es ist also durch die axial verschiebbare Filterkartusche, bei welcher in der Wandung des Kanals die zumindest eine Durchtrittsöffnung vorgesehen ist, im Zusammenwirken mit dem auf Seiten des Ölfiltergehäuses vorgesehenen Kanal ein Rückschlagventil bereitgestellt. Wenn nämlich der Öldruck einer Ölpumpe im Betrieb des Ölfilters die Filterkartusche in die zweite Position verschiebt, so kann das gefilterte Öl in den auf Seiten des Ölfiltergehäuses vorgesehenen Kanal gelangen. Das gefilterte Öl steht dann für das Schmieren eines Verbrennungsmotors des Kraftwagens zur Verfügung.

Die Bereitstellung des Rückschlagventils ist besonders einfach; es kann nämlich vorliegend auf ein relativ zu der Filterkartusche bewegbares, verschleißanfälliges Betätigungselement zum Öffnen des Rückschlagventils verzichtet werden. Vielmehr führt die Bewegung der gesamten Filterkartusche in die axiale Richtung zum Öffnen des Rückschlagventils. Es wird also das Rückschlagventil durch wenige Bauteile und bei besonders geringer Komplexität des Ölfilters bereitgestellt.

Vorliegend wird also der Druckverlust über die Filterkartusche dazu verwendet, die axiale Bewegung der Filterkartusche zu erzeugen beziehungsweise zu bewirken. Die Differenz des Drucks des ungefilterten Öls auf die Filterkartusche gegenüber dem Druck des gefilterten Öls auf die Filterkartusche wird vorliegend also genutzt, um das Rückschlagventil aufzudrücken.

Bevorzugt wird dann, wenn die Ölpumpe keinen Druck mehr aufbaut, also beim Abstellen des Verbrennungsmotors, die Filterkartusche in die erste Position verschoben. Dies kann durch ein Federelement bewirkt sein, welches auf Seiten des Ölfiltergehäuses und/oder auf Seiten der Filterkartusche angeordnet sein kann. In dieser ersten Position der Filterkartusche sorgt das Unterbinden des Durchströmtwerdens der zumindest einen Durchtrittsöffnung in der Wandung des Kanals der Filterkartusche dafür, dass der Druck im Ölkreislauf erhalten bleibt und somit der Ölkreislauf nicht leerläuft. Entsprechend ist durch die axial verschiebbare Filterkartusche auf vereinfachte Art eine Ventilfunktion bereitgestellt, nämlich die Funktion eines Rückschlagventils. Dadurch, dass die Filterkartusche selber als verschiebbarer Ventilkolben ausgeführt ist, lässt sich eine Reduzierung der Bauteilanzahl, des Gewichts und der Komplexität des die Filterkartusche aufweisenden Ölfilters erreichen. Des Weiteren sind so Vorteile im Hinblick auf für den Ölfilter vorzusehenden Bauraum erreichbar.

Bei aus dem Stand der Technik bekannten Rückschlagventilen im Ölkreislauf kann es, je nach Einbaulage des Rückschlagventils, dazu kommen, dass zumindest die Reinölseite des Bereichs des Ölfilters leerläuft, in welchem sich die Filterkartusche befindet. Dies führt dazu, dass bei einem Start des Verbrennungsmotors der Aufbau von Druck im Öl länger dauert, als dies wünschenswert ist. Dadurch, dass vorliegend dieses Leerlaufen verhindert ist, ergibt sich eine erhöhte Menge an im Ölkreislauf zurückgehaltenem Öl. Dies führt zu einem besonders raschen Öldruckaufbau nach dem Start des Verbrennungsmotors des Kraftwagens.

Die verringerte Anzahl an vorzusehenden Bauteilen betrifft einerseits die Einzelteile der unterschiedlichen Ventile wie etwa des Rückschlagventils und des Bypassventils. Des Weiteren kann ein Stützdom entfallen, welcher bei aus dem Stand der Technik bekannten Ölfiltern vorgesehen ist, um Öl, welches sich im Bereich der Filterkartusche befindet, bei einem Stopp des Verbrennungsmotors im Ölfilter zurückzuhalten. Darüber hinaus lässt sich durch das Vorsehen einer Mehrzahl von Durchtrittsöffnungen in der Wandung des Kanals der Filterkartusche ein besonders großer durchströmbarer Querschnitt, also ein erhöhter Ventilquerschnitt, zur Verfügung stellen. Dies verringert den durch den Ölfilter und insbesondere durch die Filterkartusche bedingten Druckverlust im Betrieb des Ölfilters. Da die Ölpumpe üblicherweise mittels des Verbrennungsmotors angetrieben wird, führt der reduzierte Druckverlust auch zu einer Reduzierung des Kraftstoffverbrauchs des Verbrennungsmotors. Die Kraftstoffersparnis geht mit einem hohen Kosten-Nutzen-Verhältnis einher.

Dadurch, dass Bauteile beziehungsweise Bauteilgruppen entfallen können beziehungsweise entsprechende Funktionsträger in das Ölfiltergehäuse integriert sein können, ergibt sich des Weiteren eine Kostenreduktion. Des Weiteren ist so eine kostengünstige und robuste Lösung bereitgestellt, welche insbesondere für den Einsatz in einer Serienfertigung, insbesondere Großserienfertigung geeignet ist.

Vorliegend wird zwar das zum Schmieren des Verbrennungsmotors des Kraftwagens eingesetzte Medium als Öl bezeichnet, jedoch ist auch eine Verwendung der Filterkartusche für andere Medien, insbesondere für andere Schmiermittel als Öl möglich.

Vorzugsweise ist durch Verbringen der Filterkartusche in eine dritte Position, in welcher die Filterkartusche bezogen auf die zweite Position weiter in die axiale Richtung der Filterkartusche verschoben ist, ein Einlass für ungefiltertes Öl in einen Kanal freigebbar. Der Einlass ist durch Verbringen der Filterkartusche in die erste Position und durch Verbringen der Filterkartusche in die zweite Position verschließbar. In der dritten Position der Filterkartusche kann dementsprechend ungefiltertes Öl in den Kanal gelangen, dessen Einlass freigegeben ist. Entsprechend ist durch das Verschieben der Filterkartusche in die dritte Position ein Bypassventil beziehungsweise Entlastungsventil oder Überdruckventil bereitgestellt.

Dieses Bypassventil sorgt dafür, dass beispielsweise bei verstopftem Filtermaterial der Filterkartusche zumindest ungefiltertes Öl zum Verbrennungsmotor des Kraftwagens gelangen kann. In der ersten und in der zweiten Position der Filterkartusche ist dieser Einlass für das ungefilterte Öl nicht freigegeben, sondern verschlossen. So ist dafür gesorgt, dass bei abgestelltem Verbrennungsmotor und bei laufendem Verbrennungsmotor kein ungefiltertes Öl in den Kanal gelangt, sofern nicht das Filtermaterial der Filterkartusche zugesetzt oder verstopft ist.

Der Kanal der Filterkartusche kann einen ersten Bereich aufweisen, welcher an die erste Endplatte der Filterkartusche angrenzt und in welchem die zumindest eine Durchtrittsöffnung ausgebildet ist. Der Kanal der Filterkartusche kann des Weiteren einen zweiten Bereich aufweisen, in welchem durch wenigstens eine weitere Durchtrittsöffnung der Einlass für das ungefilterte Öl in den Kanal bereitgestellt ist. Durch Verbringen der Filterkartusche in die dritte Position ist das ungefilterte Öl über die wenigstens eine weitere Durchtrittsöffnung in den Kanal der Filterkartusche einbringbar. Entsprechend kann also der Kanal der Filterkartusche bei dieser Ausgestaltung sowohl von gefiltertem Öl als auch - bei geöffnetem Bypassventil - von ungefiltertem Öl durchströmt werden. Das ungefilterte Öl kann jedoch lediglich dann in diesen Kanal gelangen, wenn die Filterkartusche in die dritte Position verschoben ist.

Das Verschieben der Filterkartusche aus der zweiten Position in die dritte Position erfolgt bevorzugt gegen die Federkraft eines Federelements. Hierbei bringt die Federkraft bevorzugt einen Druck auf die Filterkartusche auf, welcher wesentlich größer ist als der bei nicht verstopftem oder zugesetztem Filtermaterial auf die Filterkartusche wirkende Betriebsdruck, welcher die Filterkartusche aus der ersten Position in die zweite Position verschiebt.

Bevorzugt ist der zweite Bereich als endseitig geschlossener und rohrförmiger Stutzen ausgebildet, wobei an einer Außenseite des Stutzens wenigstens ein Dichtelement angeordnet ist. Vorzugsweise sind hierbei - in die Bewegungsrichtung der Filterkartusche beim Bewegen derselben aus der ersten Position in die zweite Position gesehen - beidseitig der wenigstens einen weiteren Durchtrittsöffnung Dichtelemente an der Außenseite des Stutzens angeordnet. Durch das Vorsehen derartiger radialer Dichtungen kann besonders einfach und zuverlässig sichergestellt werden, dass lediglich dann ungefiltertes Öl die weitere Durchtrittsöffnung durchströmt, wenn die Filterkartusche in die dritte Position verschoben ist.

In der Demontageposition ist entsprechend das Verschlusselement von dem Ablasskanal beabstandet. Insbesondere kann die Filterkartusche in der Demontageposition an einem Deckelelement des Ölfiltergehäuses gehalten sein. Hierfür können an der Filterkartusche Krallen oder dergleichen Halteelemente vorgesehen sein, welche mit auf Seiten des Deckelelements vorgesehenen Krallen oder dergleichen Halteelementen zusammenwirken können. Die Länge der Krallen der Filterkartusche und des Deckelelements ist hierbei so bemessen, dass die axiale Verschiebbarkeit der Filterkartusche aus der ersten Position in die zweite Position und aus der zweiten Position in die dritte Position gewährleistet ist.

Das Verschlusselement kann als Hülsenelement ausgebildet sein, welches einen Aufnahmeraum begrenzt. Der Aufnahmeraum ist zwischen einem ersten Bereich des die zumindest eine Durchtrittsöffnung aufweisenden Kanals der Filterkartusche und dem Hülsenelement ausgebildet. Hierbei weist das Hülsenelement wenigstens eine Durchtrittsöffnung auf, über welche das ungefilterte Öl in den Aufnahmeraum einbringbar ist. In der dritten Position der Filterkartusche ist das ungefilterte Öl aus dem Aufnahmeraum in den auf Seiten des Ölfiltergehäuses vorgesehenen Kanal einbringbar.

Bei einer derartigen Ausgestaltung kann insbesondere durch das Vorsehen von in axialer Richtung (also in die axiale Richtung der Filterkartusche) gegen eine entsprechende Anlagefläche gepressten Dichtungen die Funktion des Bypassventils oder Überdruckventils bereitgestellt werden. Derartige axiale Dichtungen sorgen für eine besonders verschleißarme, zuverlässige und funktionssichere Abdichtung bei geschlossenem Ventil.

Das Hülsenelement kann insbesondere entlang einer von der ersten Endplatte der Filterkartusche abstehenden Wandung der Filterkartusche verschiebbar sein. Durch eine derartige, insbesondere ebenfalls hülsenförmige Wandung kann eine besonders exakte und prozesssichere Führung des Hülsenelements beim Verschieben desselben sichergestellt werden.

Ein Federelement zum Verschieben des Verschlusselements ist bevorzugt auf Seiten der Filterkartusche bereitgestellt. Entsprechend kann an der Filterkartusche ein Federelement angeordnet sein, mittels welchem das Verschlusselement in einer den Einlass des Ablasskanals verschließenden Stellung mit einer Federkraft des Federelements beaufschlagt ist. Dann wird dieses Federelement zum Bewegen des Verschlusselements gemeinsam mit der Filterkartusche getauscht, wenn die Filterkartusche ausgewechselt wird. Somit kann einem Verschleiß des Federelements besonders gut Rechnung getragen werden.

Das Federelement kann insbesondere aus einem Kunststoff gebildet sein. Dadurch ist es möglich, die gesamte Filterkartusche einschließlich des Federelements einer Entsorgung durch Verbrennen zuzuführen. Denn hierbei verbrennt das aus dem Kunststoff gebildete Federelement mit. Dies verringert den Aufwand bei der Entsorgung der gebrauchten Filterkartusche.

Des Weiteren weist bevorzugt das Verschlusselement wenigstens ein Dichtelement auf, welches zum Abdichten des Einlasses des Ablasskanals vorgesehen ist. Dann wird nämlich auch dieses in die axiale Richtung der Filterkartusche wirkende wenigstens eine Dichtelement beim Austausch der Filterkartusche mit ausgetauscht. Entsprechend kann so auch einem Verschleiß des Dichtelements zum Abdichten des Einlasses des Ablasskanals vereinfacht Rechnung getragen werden.

Als weiter vorteilhaft hat es sich gezeigt, wenn an einer Außenseite eines Bereichs des Kanals der Filterkartusche, welcher die zumindest eine Durchtrittsöffnung aufweist, ein Dichtelement angeordnet ist. Das Dichtelement läuft in radialer Richtung um den Bereich des Kanals um. Das Dichtelement ist in eine Strömungsrichtung des gefilterten Öls durch den Kanal der Filterkartusche betrachtet stromaufwärts der zumindest einen Durchtrittsöffnung angeordnet. Beispielsweise kann das Dichtelement durch wenigstens eine O-Ring-Dichtung bereitgestellt sein. Durch eine derartige radiale Dichtung kann besonders einfach sichergestellt werden, dass im Normalbetrieb, also bei (noch) nicht verstopftem beziehungsweise zugesetztem Filtermaterial lediglich gefiltertes Öl in den auf Seiten des Ölfiltergehäuses vorgesehenen Kanal für das gefilterte Öl gelangt.

Durch entsprechende Auslegung der Federelemente des Ölfilters kann dafür gesorgt werden, dass die Filterkartusche im Betrieb nicht schwingt, also keine rasch wechselnden Bewegungen in die axiale Richtung der Filterkartusche auftreten. Des Weiteren sind hierfür bevorzugt in den jeweiligen Positionen der Filterkartusche definierte Zwischenanschläge vorgesehen. Darüber hinaus können auf Seiten der Filterkartusche und/oder auf Seiten des Ölfiltergehäuses Dämpfungsvolumina mit als Drossel wirkenden Durchtrittsöffnungen beziehungsweise Bohrungen vorgesehen sein. Auch dies dient dem Vermeiden eines axialen Schwingens der Filterkartusche.

Die für die erfindungsgemäße Filterkartusche beschriebenen Vorteile und bevorzugten Ausführungsformen gelten auch für den erfindungsgemäßen Ölfilter und umgekehrt.

Hierbei bewirkt bevorzugt ein Federelement das Verschieben der Filterkartusche aus der zweiten Position in die erste Position, wenn ein Verbrennungsmotor des Kraftwagens abgeschaltet ist. Gegen den Druck dieses Federelements bewirkt bei laufendem Verbrennungsmotor eine Ölpumpe hingegen das Verschieben der Filterkartusche aus der ersten Position in die zweite Position. Der Hub beziehungsweise der Weg des Verschiebens der Filterkartusche in die axiale Richtung resultiert hierbei aus der Druckdifferenz des auf jeweilige Bereiche der Filterkartusche drückenden Öls unter Berücksichtigung der von dem Federelement aufgebrachten Federkraft.

Durch einen solchen Ölfilter ist eine Vereinfachung insbesondere im Hinblick auf die Bereitstellung der unterschiedlichen Ventilfunktionen erreicht. Dies gilt insbesondere für die Integration des Rückschlagventils in die Filterkartusche beziehungsweise das Filterelement. Bevorzugt sind jedoch sowohl die Funktionen des Rückschlagventils als auch des Serviceventils und des Bypassventils in einen Ventilkolben in Form der axial verschiebbaren, also schwimmend gelagerten Filterkartusche integriert ausgeführt. Durch die in die axiale Richtung beweglich beziehungsweise schwimmend gelagerte Filterkartusche lassen sich Vorteile im Hinblick auf eine Kombination der durch die Filterkartusche bewirkten Filtrationen des Öls und die Ventilsteuerung erreichen.

Bevorzugt weist das Ölfiltergehäuse eine rohrförmige Aufnahme auf, in welcher ein die zumindest eine Durchtrittsöffnung aufweisender erster Bereich des Kanals der Filterkartusche aufgenommen ist, wenn die Filterkartusche in die erste Position oder in die zweite Position verbracht ist. Der erste Bereich des Kanals liegt zumindest in der ersten Position und in der zweiten Position der Filterkartusche an einer Verschlusseinrichtung an. Die Verschlusseinrichtung ist durch Verschieben der Filterkartusche aus der ersten Position in die zweite Position von der rohrförmigen Aufnahme weg bewegbar, um den Einlass in den auf Seiten des Ölfiltergehäuses vorgesehenen Kanal freizugeben. Die Druckdifferenz zwischen dem ungefilterten Öl und dem gefilterten Öl auf der Reinölseite des Filtermaterials führt im Betrieb des Ölfilters, also bei laufendem Verbrennungsmotor und somit angetriebener Ölpumpe, zum Freigeben des Einlasses in den auf Seiten des Ölfiltergehäuses vorgesehenen Kanal, indem die Filterkartusche die Verschlusseinrichtung verschiebt.

Hierbei kann die Filterkartusche die Verschlusseinrichtung gegen die Federkraft eines Federelements verschieben. Durch das Anliegen des ersten Bereichs des Kanals der Filterkartusche an der Verschlusseinrichtung ist ein definierter Zwischenanschlag beim Bewegen der Filterkartusche bereitgestellt. Dies macht das Bereitstellen der wenigstens einen Ventilfunktion besonders prozesssicher.

Vorzugsweise weist das Ölfiltergehäuse einen Anschlag für ein Federelement auf, welches bei einem Verbringen der Filterkartusche in eine dritte Position, in welcher die Filterkartusche bezogen auf die zweite Position noch weiter in die axiale Richtung der Filterkartusche verschoben ist, eine entgegen der Verschieberichtung wirkende Federkraft auf die Filterkartusche ausübt. Durch ein solches Federelement kann gezielt die Federkraft aufgebracht werden, welche zu überwinden ist, um das Öffnen des Bypassventils zu bewirken.

Hierbei kann durch ein Wegbewegen der rohrförmigen Aufnahme von einer Wandung des Ölfiltergehäuses ein Einlass für ungefiltertes Öl in einen Kanal freigebbar sein. Entsprechend kann durch das Wegbewegen der rohrförmigen Aufnahme von der Wandung der Einlass in den Kanal freigegeben werden. Das Wegbewegen der rohrförmigen Aufnahme von der Wandung kann beispielsweise dadurch bewirkt werden, dass die rohrförmige Wandung an einer Endplatte der Filterkartusche anliegt und aufgrund des zugesetzten oder verstopften Filtermaterials ein erhöhter Druck auf der Seite des ungefilterten Öls im Vergleich zu dem Druck auf der Reinölseite der Filterkartusche vorliegt. Entsprechend schiebt dann die Filterkartusche die rohrförmige Aufnahme von der Wandung des Ölfiltergehäuses weg. Auch hier ist durch das Anliegen der rohrförmigen Aufnahme an der Endplatte der Filterkartusche ein Zwischenanschlag bereitgestellt, welcher dem prozesssicheren Verschieben der Filterkartusche zuträglich ist.

Zusätzlich oder alternativ kann durch ein Herausbewegen eines zweiten, wenigstens eine weitere Durchtrittsöffnung aufweisenden Bereichs des Kanals der Filterkartusche aus einer auf Seiten des Deckelelements bereitgestellten weiteren rohrförmigen Aufnahme für den zweiten Bereich des Kanals ein Einlass für ungefiltertes Öl in einen Kanal freigegeben werden. Die weitere rohrförmige Aufnahme für den zweiten Bereich des Kanals kann insbesondere eine Einströmöffnung für ungefiltertes Öl aufweisen. Auf diese Weise bewirken Schwankungen im Druck des ungefilterten Öls nicht unmittelbar ein Verschieben der Filterkartusche. Vielmehr sorgt das Hindurchströmen des ungefilterten Öls durch die wenigstens eine Einströmöffnung in der rohrförmigen Aufnahme für eine Dämpfung. Die wenigstens eine Einströmöffnung dient somit als Drossel, welche ein axiales Schwingen der Filterkartusche verhindert.

Schließlich hat es sich als vorteilhaft gezeigt, wenn das Ölfiltergehäuse den Ablasskanal aufweist, wobei der Einlass des Ablasskanals mittels des relativ zu der ersten Endplatte der Filterkartusche in die axiale Richtung der Filterkartusche verschiebbaren Verschlusselements verschlossen ist, wenn sich die Filterkartusche in der ersten Position oder in der zweiten Position befindet. Durch das Vorsehen eines solchen Ablasskanals kann im Zusammenwirken mit dem Verschlusselement besonders einfach ein Serviceventil bereitgestellt werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer Schnittansicht einen Ölfilter eines Kraftwagens, wobei ein Ölfiltergehäuse des Kraftwagens geöffnet ist und eine Filterkartusche in das Ölfiltergehäuse eingebaut wird;
- Fig. 2: in einer vergrößerten Detailansicht einen Endbereich der Filterkartusche;
- Fig. 3: in einer Detailansicht auf Seiten des Ölfiltergehäuses vorgesehene Komponenten des Ölfilters;
- Fig. 4: den Ölfilter gemäß Fig. 1 bei geschlossenem Ölfiltergehäuse und ausgeschaltetem Verbrennungsmotor;
- Fig. 5: den Ölfilter gemäß Fig. 1 bei geschlossenem Ölfiltergehäuse bei laufendem Verbrennungsmotor;
- Fig. 6: schematisch die Kräfte, welche beim Verschieben der Filterkartusche gemäß Fig. 5 wirken;
- Fig. 7: die bei zugesetztem Filtermaterial noch weiter in die axiale Richtung verschobene Filterkartusche, wobei ein Bypassventil geöffnet wird;
- Fig. 8: die beim Öffnen des Bypassventils gemäß Fig. 7 wirkenden Kräfte;
- Fig. 9: in einer Schnittansicht eine Variante des Ölfilters bei geöffnetem Ölfiltergehäuse mit einer sich in einer Servicestellung befindenden Filterkartusche, wobei in das Ölfiltergehäuse eine Variante der Filterkartusche eingebaut wird;
- Fig. 10: in einer vergrößerten Detailansicht einen Ausschnitt der Filterkartusche gemäß Fig. 9
- Fig. 11: in einer vergrößerten Detailansicht Komponenten des Ölfiltergehäuses gemäß Fig. 9;
- Fig. 12: den Ölfilter gemäß Fig. 9 mit geschlossenem Ölfiltergehäuse und in das Ölfiltergehäuse eingebauter Filterkartusche bei nicht laufendem Verbrennungsmotor;
- Fig. 13: den Ölfilter gemäß Fig. 9 bei laufendem Verbrennungsmotor;
- Fig. 14: das Öffnen eines Bypassventils bei laufendem Verbrennungsmotor und verstopftem Filtermaterial bei der Variante des Ölfilters gemäß Fig. 9;
- Fig. 15: in einer vergrößerten Schnittansicht eine Möglichkeit der Ausgestaltung eines Endbereichs eines Kanals der Filterkartusche, wobei der Endbereich des Kanals endseitig geschlossen ist;
- Fig. 16: eine Variante der Filterkartusche, wobei der Endbereich des Kanals endseitig offen ist; und
- Fig. 17: eine weitere Variante der Filterkartusche, wobei im Endbereich des Kanals ein Druckstück vorgesehen ist.

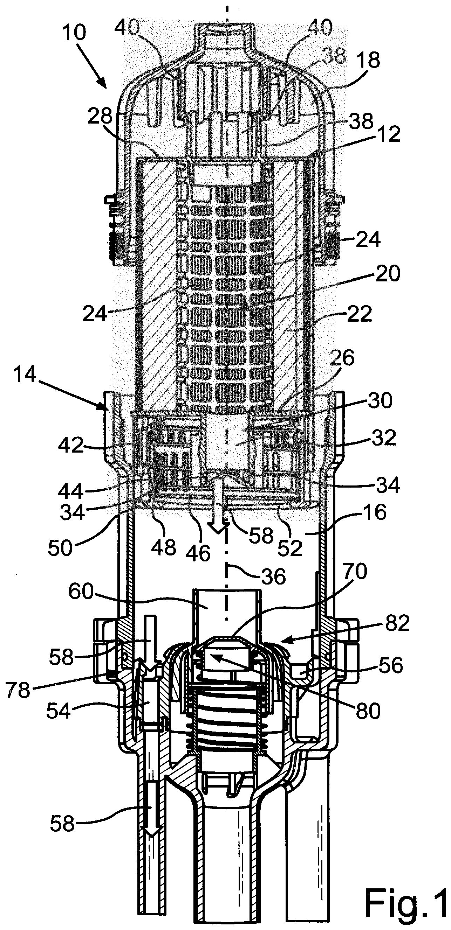

Fig. 1 zeigt in einer Schnittansicht einen Ölfilter 10 für einen Kraftwagen, bei welchem es sich insbesondere um ein Nutzfahrzeug handeln kann. Jedoch ist eine in Fig. 1 ebenfalls geschnitten gezeigte Filterkartusche 12 des Ölfilters 10 auch für einen (vorliegend nicht gezeigten) Ölfilter eines Personenkraftwagens verwendbar. Der Ölfilter 10 umfasst ein Ölfiltergehäuse 14, welches einen Grundkörper 16 und einen Deckel 18 beziehungsweise ein Deckelelement umfasst. Um die Filterkartusche 12 zu wechseln, wird der Deckel 18 von dem Grundkörper 16 demontiert beziehungsweise abgenommen, wie dies in Fig. 1 veranschaulicht ist.

Die Filterkartusche 12 weist einen Kanal 20 auf, welcher in radialer Richtung von einem Filtermaterial 22 umgeben ist. Das Filtermaterial 22 kann beispielsweise als Faltenfilter ausgebildet sein. Der Kanal 20 ist rohrförmig ausgebildet und weist in dem Bereich, in welchem er von dem Filtermaterial 22 umgeben ist, eine Vielzahl von Ausnehmungen 24 auf. Über diese Ausnehmungen 24 kann das mittels des Filtermaterials 22 gefilterte Öl in den Kanal 20 gelangen. Das ungefilterte Öl tritt dementsprechend in radialer Richtung, also von außen her durch das Filtermaterial 22 hindurch und gelangt so in den Kanal 20.

Der Kanal 20 ist in einem Bereich zwischen einer ersten, gemäß Fig. 1 unteren Endplatte 26 und einer zweiten, gemäß Fig. 1 oberen Endplatte 28 von dem Filtermaterial 22 umgeben. In einem an die erste Endplatte 26 anschließenden Bereich 30 ist der Kanal 20 als rohrförmiger Stutzen ausgebildet. In einer Wandung 32 dieses Bereichs 30 des Kanals 20 ist eine Mehrzahl von Durchtrittsöffnungen 34 ausgebildet, deren Funktion nachfolgend näher erläutert werden wird.

Von der oberen oder zweiten Endplatte 28 stehen in eine axiale Richtung 36 der Filterkartusche 12 mehrere Krallen 38 im Wesentlichen senkrecht ab. Die Krallen 38 sind mit korrespondierenden Krallen 40 in Eingriff, welche an dem Deckel 18 des Ölfiltergehäuses 14 vorgesehen sind. Über dieses Zusammenwirken der Krallen 38, 40 hängt die Filterkartusche 12 am Deckel 18, wenn die Filterkartusche 12 aus dem Grundkörper 16 des Ölfiltergehäuses 14 herausgenommen wird und wenn eine ungebrauchte, also neue Filterkartusche 12 anschließend in den Grundkörper 16 des Ölfiltergehäuses 14 eingesetzt wird. Die axiale Richtung 36 entspricht somit auch der Richtung, in welche beim Einbau der Filterkartusche 12 die Filterkartusche 12 in den im Wesentlichen rohrförmigen Grundkörper 16 des Ölfiltergehäuses 14 eingeschoben beziehungsweise eingesetzt wird.

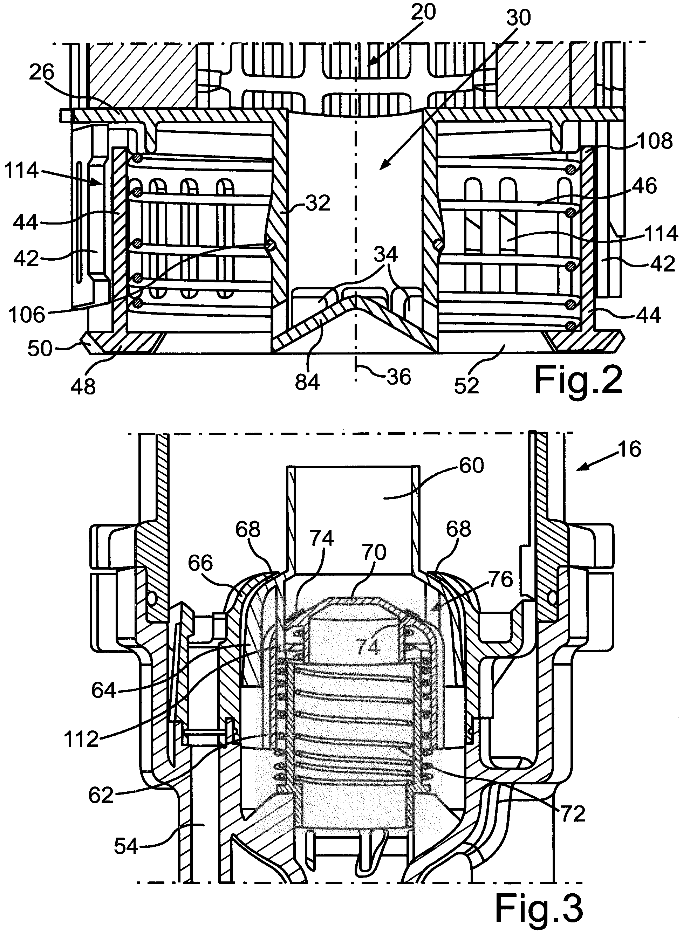

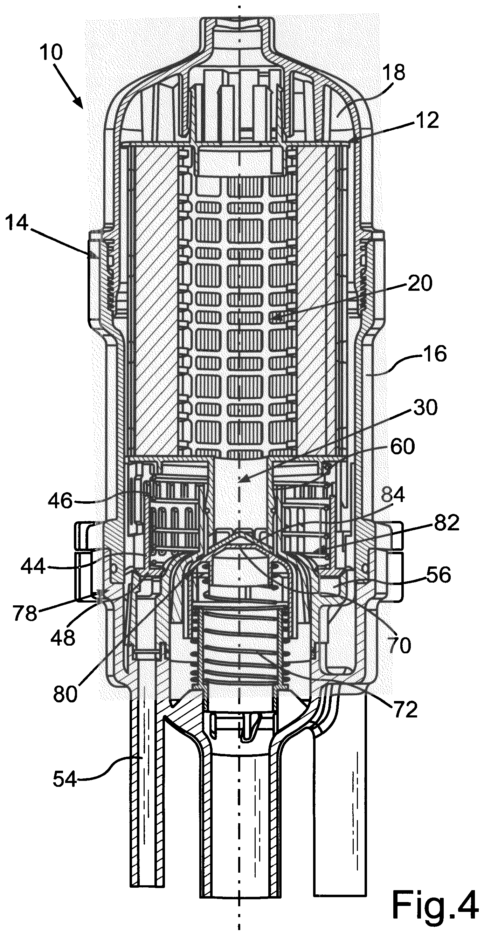

In Zusammenschau von Fig. 1 mit Fig. 2 sollen weitere Details der Filterkartusche 12 im Hinblick auf die in Fig. 1 gezeigte Serviceposition oder Demontageposition der Filterkartusche 12 erläutert werden. Von der unteren beziehungsweise ersten Endplatte 26 der Filterkartusche 12 steht eine hülsenförmige Wandung 42 in die axiale Richtung 36, also im Wesentlichen senkrecht zu der Endplatte 26 ab. Entlang dieser Wandung 42 ist ein als Verschlusselement dienendes Hülsenelement 44 in die axiale Richtung 36 verschiebbar geführt. Das Hülsenelement 44 wird mittels einer Feder 46 von der Endplatte 26 weg gedrückt. An einem axialen Ende 48 des Hülsenelements 44 sind Dichtelemente in Form eines äußeren Dichtrings 50 und eines inneren Dichtrings 52 angeordnet. Im Bereich der Dichtringe 50, 52 ist das Ende 48 konisch zulaufend beziehungsweise stempelförmig ausgebildet. Mittels dieser Dichtringe 50, 52 lässt sich ein Ablasskanal 54 für aus dem Ölfiltergehäuse 14 abzulassendes Öl verschließen, wenn der Deckel 18 des Ölfiltergehäuses 14 geschlossen ist (vergleiche Fig. 4).

In der in Fig. 1 gezeigten Servicestellung oder Demontageposition der Filterkartusche 12 ist hingegen das als Verschlusselement dienende Hülsenelement 44 mit den am Ende 48 des Hülsenelements 44 vorgesehenen Dichtringen 50, 52 von einem entsprechenden Einlass 56 des Ablasskanals 54 beabstandet. Der ringförmige Einlass 56 des Ablasskanals 54 ist vorliegend trichterförmig ausgebildet und somit zum Aufnehmen des stempelförmigen Endes 48 des Hülsenelements 44 ausgebildet. In der in Fig. 1 gezeigten Servicestellung der Filterkartusche 12 ist der Ablasskanal 54 also freigegeben. Entsprechend kann Öl aus dem Bereich des Ölfiltergehäuses 14 ablaufen, in welchem sich die Filterkartusche 12 befindet. Das Ablassen dieses ungefilterten Öls aus dem Ölfiltergehäuse 14 ist in Fig. 1 durch entsprechende Pfeile 58 veranschaulicht.

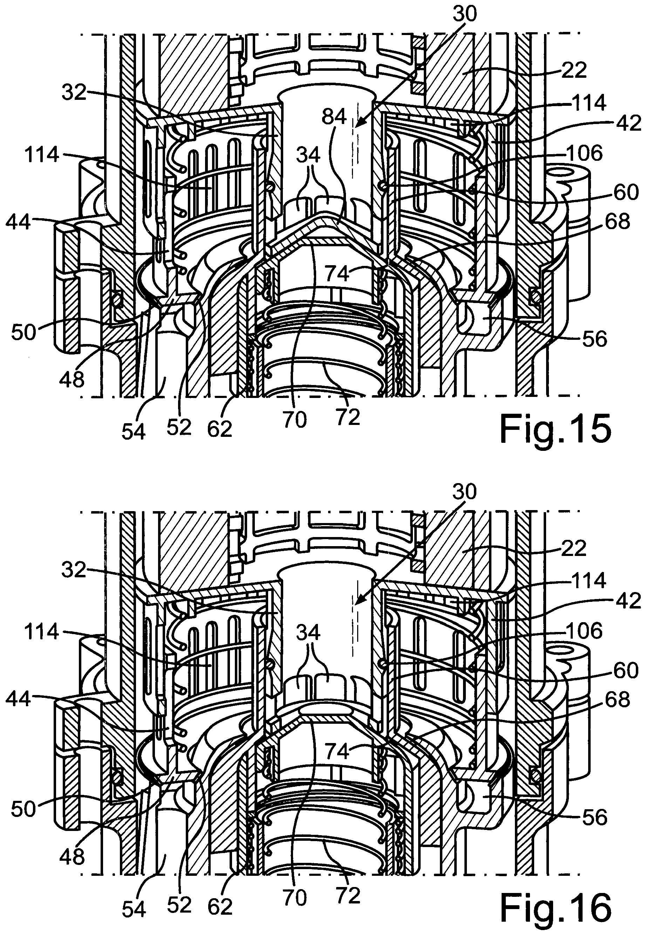

Anhand von Fig. 3 sollen weitere, auf Seiten des Grundkörpers 16 des Ölfiltergehäuses 14 vorgesehene Komponenten des Ölfilters 10 veranschaulicht werden. So ist auf Seiten des Grundkörpers 16 eine rohrförmige Aufnahme 60 vorgesehen, in welcher der Bereich 30 des Kanals 20 der Filterkartusche 12 aufgenommen ist, wenn die Filterkartusche 12 in dem Ölfiltergehäuse 14 angeordnet und der Deckel 18 des Ölfiltergehäuses 14 geschlossen ist (vergleiche Fig. 4). In axialer Richtung ist die rohrförmige Aufnahme 60 durch ein Federelement in Form einer Bypassventilfeder 62 abgestützt. Diese Bypassventilfeder 62 drückt einen vorliegend trichterförmigen Bereich 64 der Aufnahme 60 gegen eine vorliegend ebenfalls bereichsweise trichterförmige Wandung 66 des Grundkörpers 16 des Ölfiltergehäuses 14. Zwischen diesem Bereich 64 der Aufnahme 60 und der Wandung 66 ist eine Dichtung 68 vorgesehen (vergleiche Fig. 15).

Die Dichtung 68 kann an der Aufnahme 60 und/oder an der Wandung 66 angeordnet sein. Vorliegend sind die Wandung 66 und der Bereich 64 dort trichterförmig beziehungsweise konisch ausgebildet, wo sich die Dichtung 68 befindet. Entsprechend ist auch die Dichtung 68 vorliegend bezogen auf die axiale Richtung 36 schräg angeordnet. In Varianten des Ölfilters 10 kann an dieser Stelle jedoch bei entsprechender Gestaltung der Aufnahme 60 und der Wandung 66 auch wenigstens eine ebene beziehungsweise waagerecht angeordnete Dichtung vorgesehen sein.

Innerhalb der rohrförmigen Aufnahme 60 ist des Weiteren eine haubenförmige beziehungsweise domartige Verschlusseinrichtung 70 angeordnet. Diese Verschlusseinrichtung 70 wird in die axiale Richtung 36 von einem weiteren Federelement in Form einer Rückschlagventilfeder 72 mit einer Federkraft beaufschlagt. Die Rückschlagventilfeder 72 drückt die Verschlusseinrichtung 70 gegen die rohrförmige Aufnahme 60 (vergleiche Fig. 1).

In Fig. 3 ist die Verschlusseinrichtung 70 von einer an der rohrförmigen Aufnahme 60 ausgebildeten Anlagefläche beabstandet gezeigt. Entsprechend ist eine (vorliegend an der Verschlusseinrichtung 70 angeordnete) Dichtung 74 erkennbar. Des Weiteren ist in diesem Zustand ein auf Seiten des Ölfiltergehäuses 14 vorgesehener Kanal 76 von dem gefilterten Öl durchströmbar, welches über die Durchtrittsöffnungen 34 aus dem Kanal 20 der Filterkartusche 12 austreten kann. In der in Fig. 3 gezeigten Stellung der Verschlusseinrichtung 70, in welcher die Verschlusseinrichtung 70 entgegen der Kraft der Rückschlagventilfeder 72 von der Aufnahme 60 weg bewegt ist, ist dementsprechend ein Einlass in den auf Seiten des Ölfiltergehäuses 14 vorgesehenen Kanal 76 für das gefilterte Öl freigegeben. Entsprechend besteht eine fluidische Verbindung zwischen den Durchtrittsöffnungen 34 und dem Einlass in den Kanal 76.

Im Folgenden werden die mittels der Filterkartusche 12 realisierbaren Ventilfunktionen genauer erläutert. Durch das Zusammenwirken des Hülsenelements 44 mit der axialen Dichtung in Form der Dichtringe 50, 52 mit dem Einlass 56 des Ablasskanals 54 ist vorliegend ein Serviceventil 78 bereitgestellt. In der in Fig. 1 gezeigten Servicestellung der Filterkartusche 12, in welcher das axiale Ende 48 des Hülsenelements 44 von dem Einlass 56 des Ablasskanals 54 weg bewegt ist, ist entsprechend das Serviceventil 78 geöffnet.

Durch das Zusammenwirken der Filterkartusche 12 mit der rohrförmigen Aufnahme 60 und der Verschlusseinrichtung 70 sind des Weiteren ein Rückschlagventil 80 und ein Bypassventil 82 bereitgestellt (vergleiche Fig. 1). In der in Fig. 1 gezeigten Servicestellung sind das Rückschlagventil 80 und das Bypassventil 82 geschlossen. Das Rückschlagventil 80 ist geschlossen, wenn die an der Verschlusseinrichtung 70 angeordnete Dichtung 74 an der Aufnahme 60 anliegt. Das Bypassventil 82 ist geschlossen, wenn die vorliegend an der Aufnahme 60 angeordnete Dichtung 68 an der Wandung 66 anliegt. Die Wandung 66 dient somit quasi als Ventilträger für das Bypassventil 82.

Fig. 4 zeigt den Ölfilter 10 gemäß Fig. 1 in der Schnittansicht, wobei das Ölfiltergehäuse 14 geschlossen, also der Deckel 18 an den Grundkörper 16 montiert ist. In der in Fig. 4 gezeigten Situation ist der Verbrennungsmotor des Kraftwagens, welcher den Ölfilter 10 aufweist, nicht in Betrieb. Entsprechend läuft auch eine Ölpumpe nicht, welche bei laufendem Verbrennungsmotor ungefiltertes Öl hin zu der Filterkartusche 12 fördert. Dadurch, dass der Deckel 18 dicht sitzend an den Grundkörper 16 montiert ist, drückt die Feder 46 das stempelförmige Ende 48 des Hülsenelements 44 gegen den Einlass 56 des Ablasskanals 54. Entsprechend ist das Serviceventil 78 geschlossen.

Bei der in Fig. 1 und Fig. 4 gezeigten Variante der Filterkartusche 12 ist der Bereich 30 des Kanals 20 endseitig, also an seinem der Verschlusseinrichtung 70 zugewandten Ende, geschlossen ausgebildet. Entsprechend liegt ein (vorliegend konisch ausgebildetes) Bodenteil 84 des Kanals 20 an der (vorliegend ebenfalls konisch zulaufenden) Verschlusseinrichtung 70 an (vergleiche Fig. 15).

In der in Fig. 4 gezeigten Einbaulage der Filterkartusche 12 lastet somit der statische Druck der Filterkartusche 12 und des sich oberhalb des Bodenteils 84 befindenden Öls auf der Verschlusseinrichtung 70. Jedoch ist die Rückschlagventilfeder 72 so ausgelegt, dass ihre Federkraft größer ist als dieser statische Druck. Entsprechend ist in der in Fig. 4 gezeigten ersten Position der Filterkartusche 12 auch das Rückschlagventil 80 geschlossen. Des Weiteren ist auch das Bypassventil 82 geschlossen.

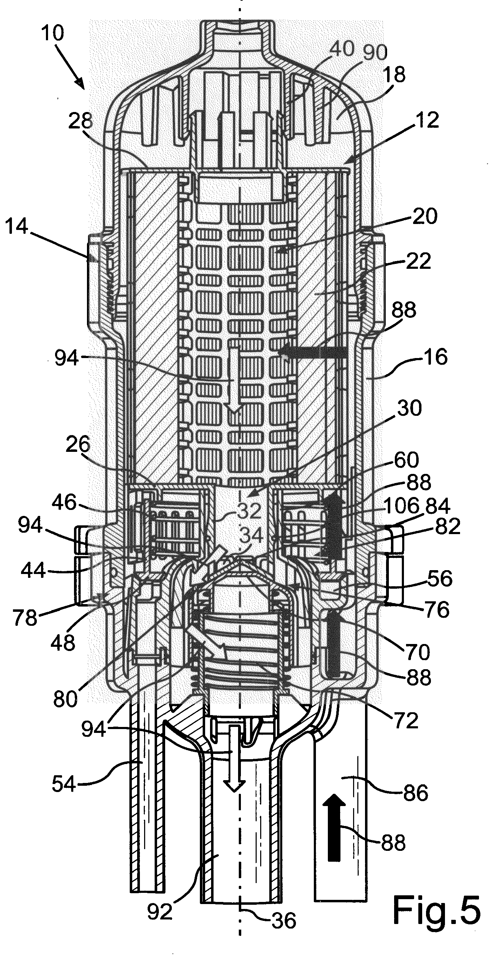

Fig. 5 veranschaulicht die Situation bei laufendem Verbrennungsmotor. Das verunreinigte, ungefilterte Öl gelangt über einen Zulaufkanal 86 in den Bereich des Ölfilters 10, in welchem sich die Filterkartusche 12 befindet. Der entsprechende Weg des Öls hin zu der Filterkartusche 12 und weiter in radialer Richtung durch das Filtermaterial 22 der Filterkartusche 12 hindurch in den inneren, mittigen Kanal 20 der Filterkartusche 12 ist in Fig. 5 durch entsprechende Pfeile 88 veranschaulicht.

Das von der Ölpumpe des Kraftwagens in den Zulaufkanal 86 eingebrachte, ungefilterte Öl übt auf die Filterkartusche 12 einen gewissen Druck aus. Von Bedeutung für das axiale Verschieben der Filterkartusche 12 in eine in Fig. 5 gezeigte zweite Position ist hierbei der auf die zweite Endplatte 28 wirkende Druck im Verhältnis zu dem auf die (kleinere) untere Endplatte 26 wirkenden Druck und der Druckverlust des Öls beim Hindurchtreten durch das Filtermaterial 22. Des Weiteren spielen die von der Rückstellventilfeder 72 und der Feder 46 aufgebrachten Federkräfte eine Rolle. Denn die Feder 46, welche das Ende 48 des Hülsenelements 44 gegen den Einlass 56 des Ablasskanals 54 drückt, ist in der in Fig. 5 gezeigten zweiten Position der Filterkartusche 12 weiter zusammengedrückt als in der in Fig. 4 gezeigten ersten Position der Filterkartusche 12. Die obere Endplatte 28 der Filterkartusche 12 liegt dementsprechend nicht mehr an Abstandshaltern 90 an, welche im Bereich der Krallen 40 am Deckel 18 des Ölfiltergehäuses 14 ausgebildet sind.

Des Weiteren liegt die untere Endplatte 26 an einem oberen, axialen Ende der rohrförmigen Aufnahme 60 an. In der in Fig. 4 gezeigten ersten Position ist hingegen die untere Endplatte 26 von dem oberen Ende der Aufnahme 60 beabstandet. Entsprechend ist der stutzenförmige Bereich 30 des Kanals 20, dessen Bodenteil 84 an der Verschlusseinrichtung 70 anliegt, weiter in die rohrförmige Aufnahme 60 eingeführt, wenn die Filterkartusche 12 in die axiale Richtung 36 aus der ersten Position (vergleiche Fig. 4) in die zweite Position (vergleiche Fig. 5) verschoben ist. Hierbei drückt der Bereich 30 der Filterkartusche 12 die Verschlusseinrichtung 70 gegen die Kraft der Rückschlagventilfeder 72 von der Aufnahme 60 weg. Entsprechend kann der Kanal 76 von gefiltertem Öl durchströmt werden. Das Rückschlagventil 80 ist also geöffnet. Das Bypassventil 82 ist demgegenüber weiterhin geschlossen. Der Strömungsweg des gefilterten Öls durch den Kanal 20, über die Durchtrittsöffnungen 34 in den Einlass des Kanals 76 und weiter durch einen in dem Grundkörper 16 des Ölfiltergehäuses 14 ausgebildeten Kanal 92 ist in Fig. 5 durch weitere Pfeile 94 veranschaulicht.

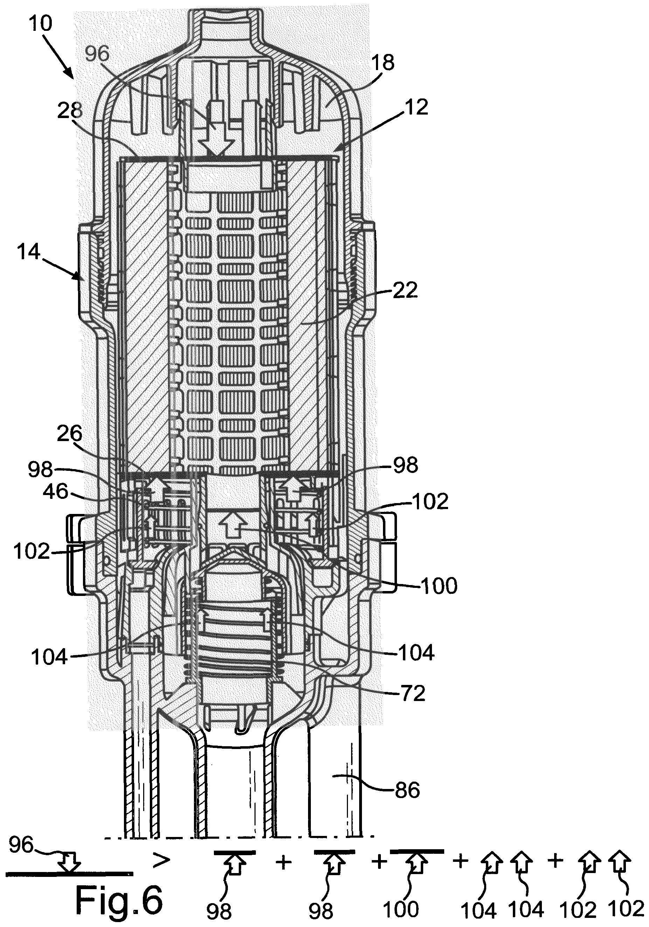

In Fig. 6 veranschaulichen Pfeile die Drücke, welche zu dem axialen Verschieben der schwimmend gelagerten Filterkartusche 12 innerhalb des Ölfiltergehäuses 14 führen, wenn die Ölpumpe das ungefilterte Öl in das Ölfiltergehäuse 14 fördert. So veranschaulichen erste Pfeile 96 den Druck des ungefilterten Öls auf die obere Endplatte 28 der Filterkartusche 12. Weitere Pfeile 98 veranschaulichen den Druck des ungefilterten Öls auf die untere Endplatte 26 der Filterkartusche 12. Ein dritter Pfeil 100 veranschaulicht den Druck des Öls stromabwärts des Filtermaterials 22, welcher entsprechend gegenüber dem Druck des ungefilterten Öls aufgrund des Druckverlusts verringert ist. Des Weiteren veranschaulichen Pfeile 102 die von der Feder 46 aufgebrachte Federkraft und Pfeile 104 die von der Rückschlagventilfeder 72 aufgebrachte Federkraft. Dementsprechend ist die durch den Pfeil 96 veranschaulichte Kraft größer als die Summe der durch die Pfeile 98, 100, 102, 104 veranschaulichten Kräfte. Diese Kraftverhältnisse bewirken das axiale Verschieben der Filterkartusche 12 bei laufendem Verbrennungsmotor.

Ein Dichtelement, welches vorliegend beispielhaft als O-Ring 106 ausgebildet ist, ist im Bereich 30 des Kanals 20 an einer Außenseite der Wandung 32 angeordnet (vergleiche Fig. 2). Diese radiale Dichtung liegt an der Innenseite der rohrförmigen Aufnahme 60 an, in welcher der Bereich 30 aufgenommen ist. Dieser O-Ring 106 beziehungsweise Dichtring wird also zusammen mit der Filterkartusche 12 axial verschoben, wenn sich die Filterkartusche 12 aus der ersten Position (vergleiche Fig. 4) in die zweite Position (vergleiche Fig. 5) bewegt. Der an der Filterkartusche 12 angeordnete beziehungsweise in die Filterkartusche 12 integrierte, zusammen mit der Filterkartusche 12 axial verschiebbare Dichtring oder O-Ring 106 ermöglicht den Axialhub der Filterkartusche 12, wobei durch dieses Dichtelement sichergestellt ist, dass in der in Fig. 5 gezeigten zweiten Position der Filterkartusche 12 lediglich das gefilterte Öl aus dem Kanal 20 und kein ungefiltertes Öl in den Kanal 76 gelangt.

Durch das Öl, welches sich im Bereich der Rückschlagventilfeder 72 befindet, ist ein hydraulischer Dämpferbereich bereitgestellt. Dadurch führen Druckschwankungen des Öls nicht zu einem axialen Schwingen mit geringer Amplitude, also zu einem rasch wechselnden hin und her Bewegen der Filterkartusche 12 innerhalb des Ölfiltergehäuses 14 in die axiale Richtung 36. Um dieses hydraulische Dämpfungsverhalten zu verbessern, können etwa im Bereich einer Wandung, an welcher die Rückschlagventilfeder 72 anliegt, Drosselbohrungen oder dergleichen durchströmbare Öffnungen vorgesehen sein.

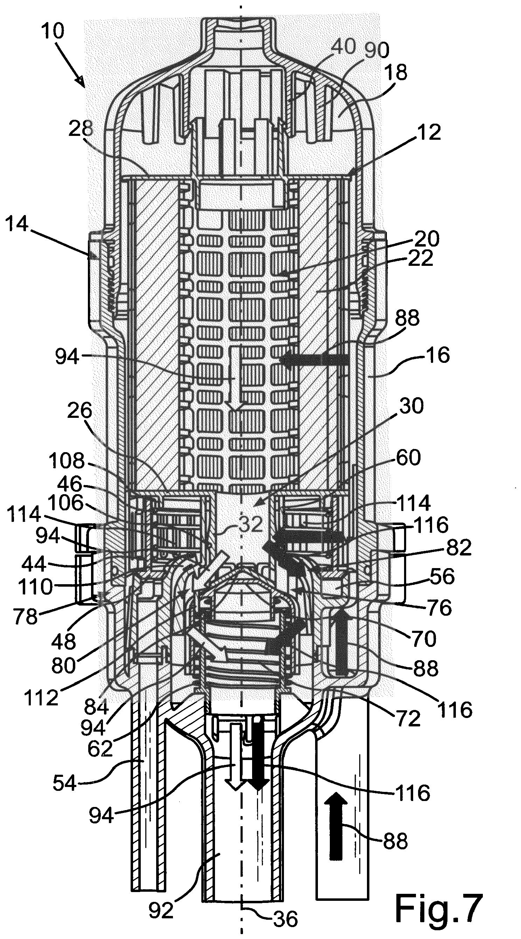

Fig. 7 zeigt den Ölfilter 10 in einer weiteren Schnittdarstellung. In der in Fig. 7 gezeigten Situation ist die Filterkartusche 12 bezogen auf die zweite Position (vergleiche Fig. 5) noch weiter in die axiale Richtung 36 verschoben. Entsprechend ist hier ein Abstand der oberen Endplatte 28 der Filterkartusche 12 von den Abstandshaltern 90 nochmals größer als in der in Fig. 5 gezeigten Situation. Nun liegt des Weiteren die untere Endplatte 26 auch an einem gemäß Fig. 7 oberen Ende 108 des Hülsenelements 44 an. Dieses obere Ende 108 des Hülsenelements 44 liegt dem unteren Ende 48 gegenüber, welches den Ablasskanal 54 verschließt. Das Serviceventil 78 ist dementsprechend weiterhin geschlossen.

Jedoch bewirkt das axiale Verschieben der Filterkartusche 12 in die axiale Richtung 36 in die in Fig. 7 gezeigte dritte Position, dass die rohrförmige Wandung 60 von der Wandung 66 weg bewegt wird. Entsprechend ist nun ein Bypasskanal 110 durchströmbar, durch welchen ungefiltertes Öl in den Kanal 92 gelangen kann. Ein Fußbereich 112 der Aufnahme 60 drückt hierbei die Bypassventilfeder 62 zusammen. Auch die Rückschlagventilfeder 72 ist noch weiter zusammengedrückt, wenn die Filterkartusche 12 in die in Fig. 7 gezeigte dritte Position verschoben ist, als dies in der in Fig. 5 gezeigten zweiten Position der Filterkartusche 12 der Fall ist.

Das ungefilterte Öl kann über vorliegend als Schlitze 114 ausgebildete Durchtrittsöffnungen, welche sowohl in der hülsenförmigen Wandung 42 als auch in dem Hülsenelement 44 ausgebildet sind (vergleiche Fig. 2), in einen vorliegend als Ringraum ausgebildeten Aufnahmeraum gelangen, welcher zwischen dem Bereich 30 beziehungsweise der Aufnahme 60 und dem Hülsenelement 44 ausgebildet ist. Aus diesem Aufnahmeraum kann das ungefilterte Öl in den Bypasskanal 110 gelangen und von diesem weiter in den Kanal 92. Dieser Weg des ungefilterten Öls ist in Fig. 7 durch entsprechende Pfeile 116 veranschaulicht. Durch die Ausgestaltung der Größe der vorliegend beispielhaft als Schlitze 114 ausgebildeten Durchtrittsöffnungen in dem Hülsenelement 44 und der Wandung 42 kann bei der in Fig. 1 bis Fig. 8 gezeigten Variante des Ölfilters 10 ein Vorfiltersieb für den Fall bereitgestellt werden, dass bei Überdruck das Bypassventil 82 beziehungsweise Überdruckventil öffnet.

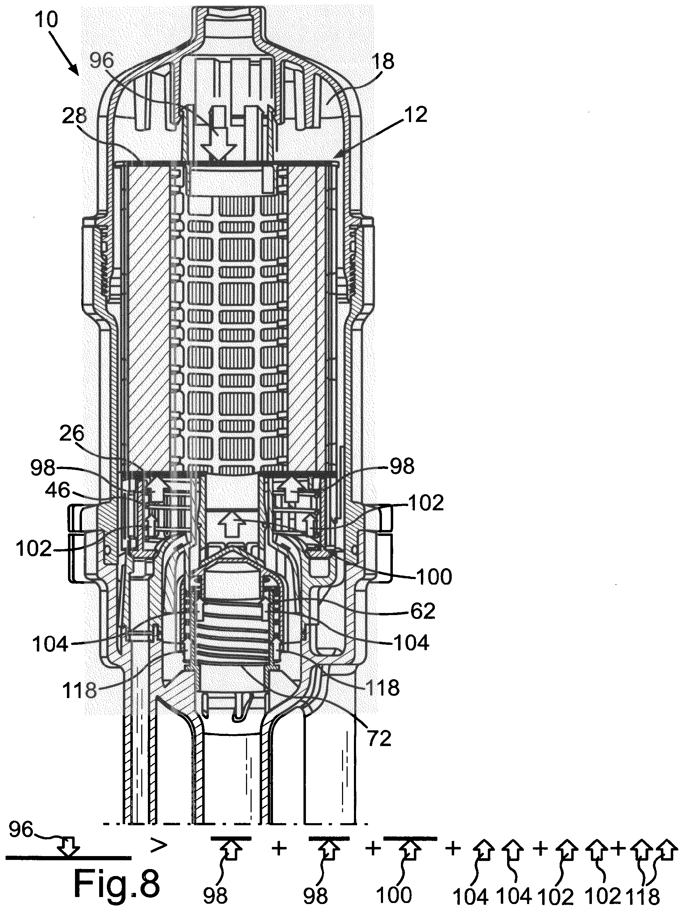

Des Weiteren veranschaulichen die Pfeile 88, 94 den zusätzlich weiterhin möglichen Weg des Öls in den Kanal 92 durch das Filtermaterial 22 hindurch und anschließend entlang des Kanals 20 der Filterkartusche 12. Zu der in Fig. 7 gezeigten Situation kommt es dann, wenn das Filtermaterial 22 verstopft beziehungsweise zugesetzt ist. Dann ist nämlich der von dem ungefilterten Öl auf die obere Endplatte 28 ausgeübte Druck weiterhin vorhanden. Jedoch ist der Druckverlust beim Hindurchtreten des Öls durch das Filtermaterial 22 nochmals größer. Entsprechend ist dann der in Fig. 6 und Fig. 8 durch den Pfeil 100 veranschaulichte Druck des Öls geringer. Dies führt dazu, dass der auf die obere Endplatte 28 wirkende Druck (vergleiche Pfeil 96 in Fig. 8) auch dazu in der Lage ist, die von der Bypassventilfeder 62 aufgebrachte Federkraft zu überwinden.

Die entsprechenden Kräfte sind in Fig. 8 schematisch dargestellt. So veranschaulichen die Pfeile 98 weiterhin den auf die untere Endplatte 26 wirkenden Druck des ungefilterten Öls und die Pfeile 104 die von der Rückschlagventilfeder 72 aufgebrachte Federkraft. Zusätzlich veranschaulichen jedoch in Fig. 8 weitere Pfeile 118 die von der Bypassventilfeder 62 aufgebrachte Federkraft. Entsprechend ist die durch den Pfeil 96 veranschaulichte Kraft größer als die Summe der durch die Pfeile 98, 100, 104, 102, 118 veranschaulichten Kräfte. Folglich ist in der in Fig. 7 gezeigten Situation auch der Bypasskanal 110 geöffnet.

Die Kräfte der Rückschlagventilfeder 72 beziehungsweise der Bypassventilfeder 62 sind bevorzugt so ausgelegt, dass die Filterkartusche 12 im Betrieb nicht schwingt. Insbesondere ist die Federkraft der Bypassventilfeder 62 sehr viel größer als die Federkraft der Rückschlagventilfeder 72. Dies sorgt dafür, dass das Bypassventil 82 nur dann öffnet, wenn aufgrund des Druckverlusts im zugesetzten beziehungsweise verstopften Filtermaterial 22 die mit Bezug auf Fig. 7 und Fig. 8 geschilderte Situation eintritt und entsprechend sowohl das Rückschlagventil 80 als auch das Bypassventil 82 geöffnet sind.

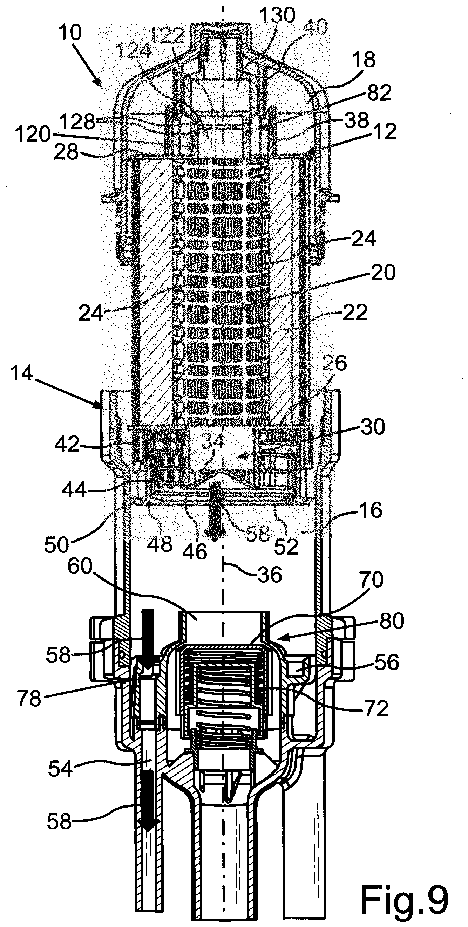

Fig. 9 zeigt eine Variante des Ölfilters 10, bei welchem die Filterkartusche 12 und das Ölfiltergehäuse 14 etwas anders aufgebaut sind als die in Fig. 1 gezeigte Filterkartusche 12 und das in Fig. 1 gezeigte Ölfiltergehäuse 14. In Fig. 9 ist die Filterkartusche 12 in der Demontageposition gezeigt, wobei das Deckelelement beziehungsweise der Deckel 18 von dem Grundkörper 16 des Ölfiltergehäuses 14 abgenommen ist. Entsprechend ist die Filterkartusche 12 über die Krallen 38 an den auf Seiten des Deckels 18 vorgesehenen Krallen 40 gehalten. In einem in Fig. 9 unteren Bereich ist die Filterkartusche 12 analog der in Fig. 1 gezeigten Filterkartusche ausgebildet. Dementsprechend sind in dem Bereich 30 des Kanals 20, welcher als rohrförmiger, vorliegend endseitig geschlossener Stutzen ausgebildet ist, die Durchtrittsöffnungen 34 vorgesehen. Auch sind das Hülsenelement 44, die Wandung 42 und die Feder 46 so wie bei der zuvor beschriebenen Variante des Ölfilters 10 ausgebildet, sodass diesbezüglich auf die entsprechende Beschreibung verwiesen wird.

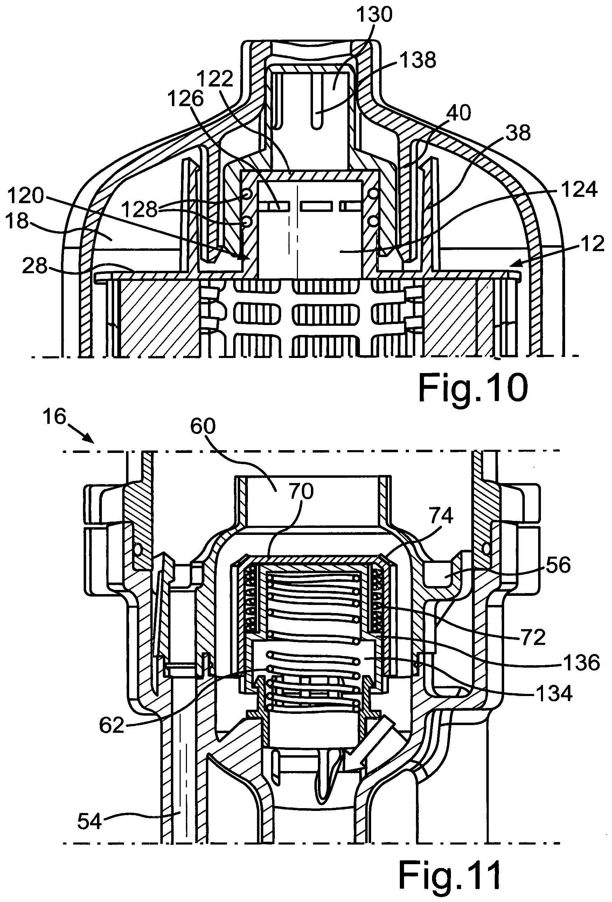

Jedoch ist die obere Endplatte 28 bei der in Fig. 9 gezeigten Variante des Ölfilters 10 beziehungsweise der Filterkartusche 12 nicht geschlossen ausgebildet. Vielmehr grenzt an die obere Endplatte 28 ein zweiter Bereich 120 des Kanals 20 an, welcher endseitig durch ein Deckelteil 122 des Kanals 20 abgeschlossen ist. Bei der Variante ist in diesem Bereich 120 das Bypassventil 82 bereitgestellt. Hierfür sind in einer rohrförmigen Wandung 124 in dem Bereich 120 Durchtrittsöffnungen 126 ausgebildet (vergleiche Fig. 10). Der Bereich 120 ist bei dieser Variante also als endseitig geschlossener, rohrförmiger Stutzen ausgebildet, wobei an der Außenseite des Stutzens beiderseits der Durchtrittsöffnungen 126 Dichtelemente etwa in Form von Dichtringen 128 angeordnet sind (vergleiche Fig. 10).

In der in Fig. 9 gezeigten Demontageposition der Filterkartusche 12 ist der Bereich 120 des Kanals 20 fast vollständig aus einer becherförmigen beziehungsweise rohrförmigen Aufnahme 130 heraus bewegt, welche auf Seiten des Deckels 18 bereitgestellt ist. Vorliegend ist die Aufnahme 130 als an einem Grundkörper des Deckels 18 angeordneter Einsatz ausgebildet. Die Aufnahme 130 kann jedoch auch einstückig mit dem Deckel 18 ausgebildet sein. In der in Fig. 9 gezeigten Position der Filterkartusche 12 sind somit die in dem Bereich 120 in der Wandung 124 ausgebildeten Durchtrittsöffnungen 126 zugänglich, sodass das Bypassventil 82 geöffnet ist. Dies liegt daran, dass der Deckel 18 noch nicht mit dem Grundkörper 16 des Ölfiltergehäuses 14 verbunden ist. Des Weiteren sind das Serviceventil 78 geöffnet und das Rückschlagventil 80 geschlossen. Das Serviceventil 78 ist durch das mit dem Einlass 56 des Ablasskanals 54 zusammenwirkende, als Verschlusselement dienende Hülsenelement 44 gebildet. Diesbezüglich wird auf die Beschreibung zu der in Fig. 1 bis Fig. 8 gezeigten Variante des Ölfilters 10 verwiesen.

Demgegenüber ist das Rückschlagventil 80 anders ausgebildet als bei der in Fig. 1 bis Fig. 8 gezeigten Variante des Ölfilters 10. Bei der in Fig. 9 gezeigten Variante des Ölfilters 10 ist nämlich die rohrförmige Aufnahme 60 ortsfest ausgebildet und somit auch in die in die axiale Richtung 36 nicht beweglich. Auch ist die Verschlusseinrichtung 70 nicht konisch zulaufend, sondern an ihrer der Filterkartusche 12 zugewandten Oberseite im Wesentlichen eben ausgebildet. Lediglich in dem Bereich, in welchem die Dichtung 74 an der Verschlusseinrichtung 70 angeordnet ist, also in einem Randbereich oder Eckbereich der Verschlusseinrichtung 70, ist die Verschlusseinrichtung 70 abgeschrägt. Die Schräge entspricht hierbei der Schräge eines trichterförmigen Bereichs 132 der Aufnahme 60 (vergleiche Fig. 11). Die Aufnahme 60 dient jedoch auch bei dieser Variante als Ventilträger.

Bei der in Fig. 9 gezeigten Variante des Ölfilters 10 umgibt die Rückschlagventilfeder 72 jedoch einen Zylinder 134, in welchem wiederum die Bypassventilfeder 62 angeordnet ist. Die Rückschlagventilfeder 72 ist dementsprechend auf einem Absatz 136 des Zylinders 134 abgestützt. In Fig. 11 ist die Verschlusseinrichtung 70 des Rückschlagventils 80 in ihre offene Stellung bewegt gezeigt. Entsprechend liegt das stirnseitige Ende, also die vorliegend ebene Oberseite der Verschlusseinrichtung 70 an einer oberen Stirnseite des Zylinders 134 an. Dementsprechend ist die Dichtung 74 von dem Bereich 132 der Aufnahme 60 weg bewegt.

In der in Fig. 9 gezeigten, geschlossenen Stellung des Rückschlagventils 80 drückt hingegen die Rückschlagventilfeder 72 die Verschlusseinrichtung 70 mit ihrer Dichtung 74 (vergleiche Fig. 11) in dicht sitzender Weise in dem Bereich 132 gegen die Aufnahme 60.

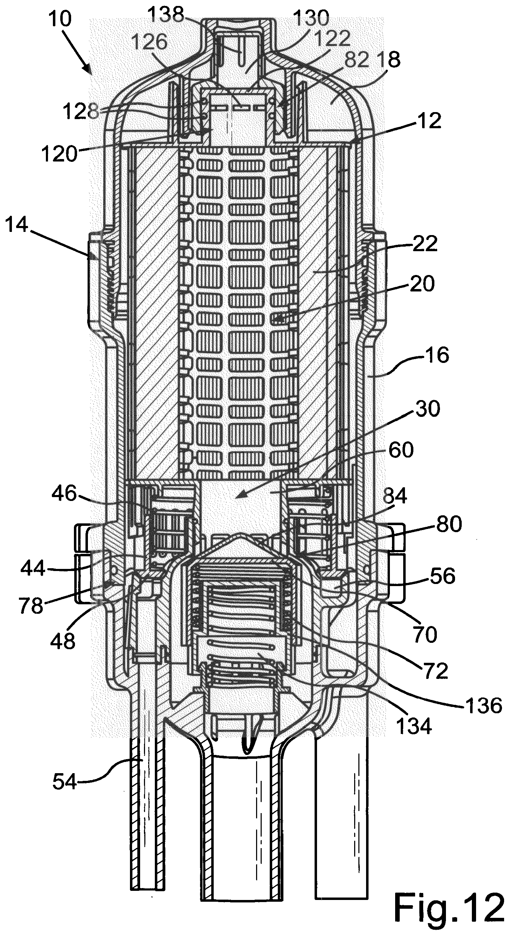

Fig. 12 zeigt den Ölfilter 10 gemäß Fig. 9 bei geschlossenem Ölfiltergehäuse 14. Entsprechend ist der Deckel 18 an den Grundkörper 16 des Ölfiltergehäuses 14 montiert. Die Feder 46 drückt das Ende 48 des Hülsenelements 44 gegen den Einlass 56. Entsprechend ist der Ablasskanal 54 nicht durchströmbar, und das Serviceventil 78 ist geschlossen. Die Filterkartusche 12 befindet sich in der ersten Position, da der Verbrennungsmotor des Kraftwagens noch nicht in Betrieb genommen ist und entsprechend die Ölpumpe noch kein Öl hin zu der Filterkartusche 12 fördert. Dementsprechend wird auch die Verschlusseinrichtung 70 mittels der Rückschlagventilfeder 72 von dem Zylinder 134 weg gedrückt. Entsprechend ist das Rückschlagventil 80 geschlossen.

Der stutzenförmige Bereich 120 des Kanals 20 ist in die Aufnahme 130 eingeführt, welche auf Seiten des Deckels 18 vorgesehen ist. Die Dichtringe 128 liegen entsprechend an einer Innenseite der rohrförmigen Aufnahme 130 an. Dementsprechend kann kein ungefiltertes Öl in die Durchtrittsöffnungen 126 eintreten. Folglich ist auch das Bypassventil 82 geschlossen.

Jedoch kann über Einströmöffnungen 138, welche in der Aufnahme 130 vorgesehen sind, ungefiltertes Öl in einen durch das Deckelteil 122 begrenzten Aufnahmeraum innerhalb der Aufnahme 130 gelangen. Dadurch ist ein hydraulischer Dämpfungsbereich bereitgestellt. Die Einströmöffnungen 138 wirken hierbei als Drosselelemente. Diese dämpfen bei etwaigen Druckschwankungen im Ölfiltergehäuse 14 ein Schwingen beziehungsweise rasches sich hin und her Bewegen der Filterkartusche 12 in die axiale Richtung 36. Dadurch, dass ein axiales Schwingen der Filterkartusche 12 verhindert ist, ist auch die Abnutzung der radialen Dichtung, vorliegend also des O-Rings 106, besonders gering.

Die als radiale Dichtungen ausgebildeten Dichtringe 128 im Bereich 120 des Kanals 20 verhindern ein Eintreten des ungefilterten Öls in den Kanal 20, solange sich die Durchtrittsöffnungen 126 in Überdeckung mit der Wandung der Aufnahme 130 befinden.

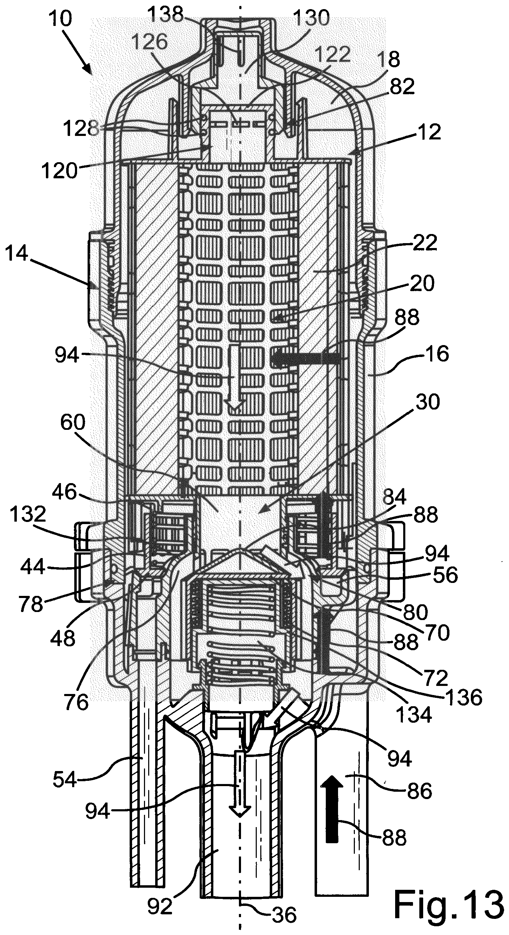

Fig. 13 zeigt die Filterkartusche 12, welche aus der in Fig. 12 gezeigten ersten Position in eine zweite Position in die axiale Richtung 36 verschoben ist. Auch hier ist das axiale Verschieben der schwimmend gelagerten Filterkartusche 12 durch den Druck bewirkt, mit welchem die Ölpumpe bei laufendem Verbrennungsmotor ungefiltertes Öl in den Ölfilter 10 fördert. Der Druckverlust beim Durchströmen des Filtermaterials 22 bewirkt, dass der Druck des ungefilterten Öls die Filterkartusche 12 in die axiale Richtung 36 verschiebt. Hierbei drückt dementsprechend der an die untere Endplatte 26 angrenzende Bereich 30 des Kanals 20 die Verschlusseinrichtung 70 in dem Bereich 132 der Aufnahme 60 weg von der Aufnahme 60. Die Rückschlagventilfeder 72 ist dementsprechend weiter zusammengedrückt als in der in Fig. 12 gezeigten ersten Position der Filterkartusche 12.

Dementsprechend sind die Durchtrittsöffnungen 34, welche in dem Bereich 30 des Kanals 20 in der Wandung 32 ausgebildet sind, fluidisch mit einem Einlass in den auf Seiten des Ölfiltergehäuses 14 vorgesehenen Kanal 76 verbunden. Es kann also gefiltertes Öl in diesen Kanal 76 gelangen, und das Rückschlagventil 80 ist geöffnet. Das Serviceventil 78 ist demgegenüber weiterhin geschlossen. Auch ist das Bypassventil 82 weiterhin geschlossen. In Fig. 13 veranschaulichen wiederum die Pfeile 88 den Weg des ungefilterten Öls durch das Ölfiltergehäuse 14 und anschließend in radialer Richtung durch das Filtermaterial 22 hindurch in den Kanal 20. In analoger Weise veranschaulichen die Pfeile 94 den Weg des gefilterten Öls durch den Kanal 20 und die Durchtrittsöffnungen 34 hindurch in den Kanal 76 und weiter hin zum Verbrennungsmotor über den Kanal 92. Die untere Endplatte 26 der Filterkartusche 12 liegt jedoch noch nicht an der Aufnahme 60 an.

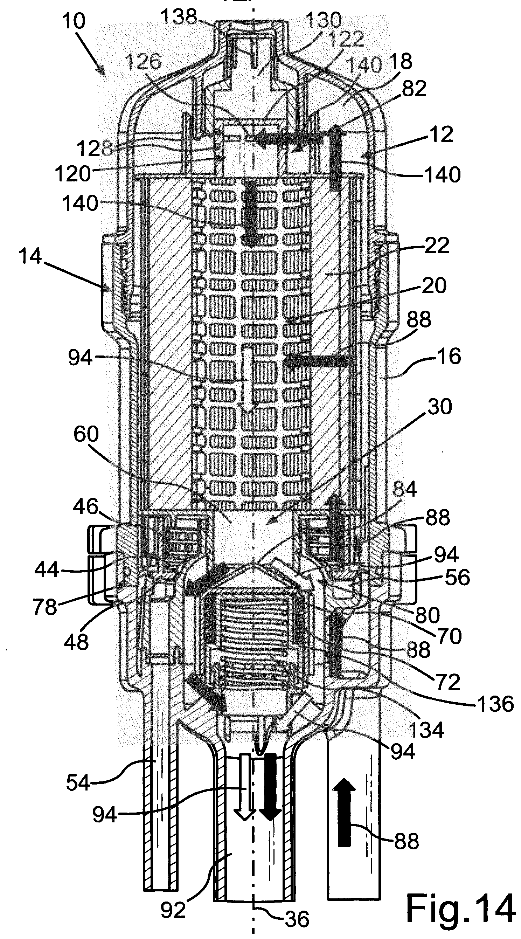

In der in Fig. 14 gezeigten Situation ist das Filtermaterial 22 verstopft beziehungsweise zugesetzt. Dementsprechend ist der Druckverlust des Öls beim Durchströmen des Filtermaterials 22 größer. Dies bewirkt, dass die Filterkartusche 12 bezogen auf die in Fig. 13 gezeigte zweite Position der Filterkartusche 12 weiter in die axiale Richtung 36 verschoben wird, nämlich ein eine dritte Position. Entsprechend gelangt die untere Endplatte 26 mit der Aufnahme 60 in Anlage. Des Weiteren wird auch der Zylinder 134 gegen die Kraft der Bypassventilfeder 62 nach unten gedrückt. Entsprechend ist bei dieser Variante auch der Kanal 76 noch weiter geöffnet. Das Rückschlagventil 80 ist also weiterhin geöffnet, während das Serviceventil 78 weiterhin geschlossen ist.

Demgegenüber ist nun auch das Bypassventil 82 geöffnet: Der Bereich 120 des Kanals 20 ist so weit aus der Aufnahme 130 heraus bewegt, dass das ungefilterte Öl über die Durchtrittsöffnungen 126 in den Bereich 120 des Kanals 20 gelangen kann. Der entsprechende Strömungsweg des ungefilterten Öls ist in Fig. 14 durch weitere Pfeile 140 veranschaulicht. Zusammen mit weiterhin durch das Filtermaterial 22 hindurchtretendem und daher gefiltertem Öl (Pfeile 94) gelangt auch das ungefilterte Öl über den Kanal 76 weiter in den Kanal 92. In dieser dritten Position der Filterkartusche 12 liegt die untere Endplatte 26 auch am oberen Ende 108 des Hülsenelements 44 an. Entsprechend ist auch die Feder 46 maximal weit zusammengedrückt. Auch die Rückschlagventilfeder 72 ist weiter zusammengedrückt, als wenn sich die Filterkartusche 12 in der in Fig. 13 gezeigten zweiten Position befindet.

Sowohl bei der in Fig. 1 bis Fig. 8 gezeigten Variante des Ölfilters 10 als auch bei der mit Bezug auf Fig. 9 bis Fig. 14 erläuterten Variante des Ölfilters 10 werden durch die Bewegung der Filterkartusche 12 das Serviceventil 78 beziehungsweise Ablaufventil, das Rückschlagventil 80 und das Bypassventil 82 beziehungsweise Überdruckventil gesteuert.

In den vorliegend gezeigten Varianten ist die dem Verschließen des Serviceventils 78 dienende Feder 46 Bestandteil der Filterkartusche 12. Es ist jedoch auch möglich, ein derartiges Federelement auf Seiten des Ölfiltergehäuses 14 vorzusehen. Des Weiteren ist die schwimmende Lagerung der Filterkartusche 12 vorliegend mit Bezug auf den Ölfilter 10 für ein Nutzfahrzeug beschrieben. Jedoch lässt sich das Öffnen zumindest des Rückschlagventils 80 und des Bypassventils 82 durch das axiale Verschieben der Filterkartusche 12 auch bei einem Ölfilter nutzen, wie er in einem Personenkraftwagen zum Einsatz kommt. Hier ist lediglich die Funktion des Serviceventils 78 nicht erforderlich. Denn bei einem Ölfilter für einen Personenkraftwagen wird die Filterkartusche 12 üblicherweise von unten in das Ölfiltergehäuse montiert beziehungsweise nach unten aus dem Ölfiltergehäuse entnommen, sodass das abzulassende Öl durch die entsprechende untenliegende Öffung ungehindert ablaufen kann.

Anhand von Fig. 15 bis Fig. 17 sollen weitere mögliche Gestaltungen des Bereichs 30 des Kanals 20 veranschaulicht werden. In Fig. 15 ist nochmals der Bereich 30 der Filterkartusche 12 vergrößert gezeigt, wie er bei den mit Bezug auf Fig. 1 bis Fig. 14 beschriebenen Varianten beispielhaft zum Einsatz kommen kann. Dementsprechend ist hier das Bodenteil 84 geschlossen ausgebildet.

Bei der in Fig. 16 gezeigten Ausgestaltung des Bereichs 30 fehlt demgegenüber ein geschlossenes Bodenteil 84, und der stutzenförmige Bereich 30 mit den Durchtrittsöffnungen 34 ist zu der Verschlusseinrichtung 70 hin offen ausgebildet.

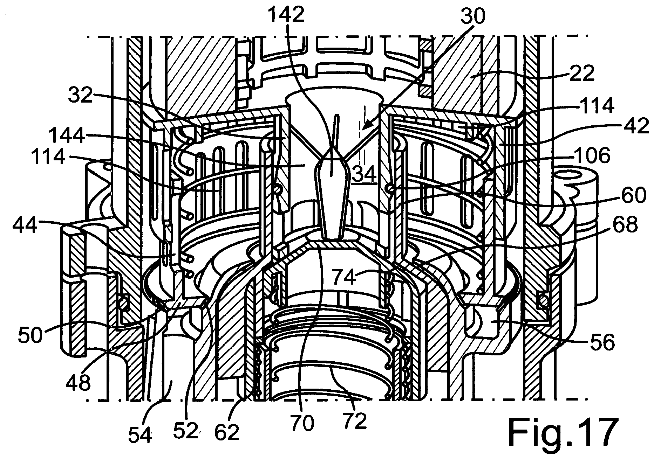

Bei der in Fig. 17 gezeigten Ausgestaltung ist der Bereich 30 ebenfalls endseitig offen ausgebildet. Jedoch ist hier im Zentrum des Bereichs 30 ein Druckstück 142 vorgesehen, welches in der in Fig. 17 gezeigten Position der Filterkartusche 12 an der Verschlusseinrichtung 70 anliegt. Die Wandung 32 umfasst hierbei sternförmig zu dem Druckstück 142 hin verlaufende Wandbereiche 144, zwischen welchen die Durchtrittsöffnungen 34 ausgebildet sind.

## Patentansprüche

1. Ölfilter für einen Kraftwagen, mit einer Filterkartusche (12), welche in einem Ölfiltergehäuse (14) des Ölfilters (10) angeordnet ist, wobei das Ölfiltergehäuse (14) einen Grundkörper (16) und ein Deckelelement (18) umfasst, wobei die Filterkartusche (12) eine erste - untere - und eine zweite - obere - Endplatte (26, 28) sowie einen Kanal (20) für gefiltertes Öl aufweist, welcher in radialer Richtung zumindest bereichsweise von einem Filtermaterial (22) der Filterkartusche (12) umgeben ist, wobei in einer Wandung (32) des Kanals (20) in einem als rohrförmiger Stutzen an die untere Endplatte (26) anschließenden Bereich (30) zumindest eine Durchtrittsöffnung (34) ausgebildet ist, wobei die Filterkartusche (12) in dem geschlossenen Ölfiltergehäuse (14), bei welchem das Deckelelement (18) an den Grundkörper (16) montiert ist, aus einer ersten Position, in welcher ein Eintreten von gefiltertem Öl über die zumindest eine Durchtrittsöffnung (34) in einen auf Seiten des Ölfiltergehäuses (14) vorgesehenen Kanal (76) für das gefilterte Öl unterbunden ist, in eine zweite Position bewegbar ist, in welcher die Filterkartusche (12) bezogen auf die erste Position in eine axiale Richtung (36) der Filterkartusche (12) verschoben ist, und in welcher ein Einlass in den auf Seiten des Ölfiltergehäuses (14) vorgesehenen Kanal (76) mit der zumindest einen Durchtrittsöffnung (34) fluidisch verbunden ist, und **dadurch gekennzeichnet, dass** von der unteren Endplatte (26) der Filterkartusche (12) eine hülsenförmige Wandung (42) in axialer Richtung (36) absteht, entlang welcher ein als Verschlusselement dienendes Hülsenelement (44) im Ölfiltergehäuse (14) axial verschiebbar geführt ist, mittels welchem ein ringförmiger Einlass (56) eines Ablasskanals (54) zum Ablassen des Öls aus einem Aufnahmebereich des Ölfiltergehäuses (14) für die Filterkartusche (12) verschließbar ist, wobei der ringförmige Einlass (56) des Ablasskanals (54) durch Verbringen der Filterkartusche (12) in eine Demontageposition der Filterkartusche (12), in welcher die Filterkartusche (12) aus der ersten Position in eine der zweiten Position entgegengesetzte Richtung bewegt ist, freigebbar ist.

2. Ölfilter nach Anspruch 1,
**dadurch gekennzeichnet, dass**
an der Filterkartusche (12) ein, insbesondere aus einem Kunststoff gebildetes, Federelement (46) angeordnet ist, mittels welchem das Verschlusselement (44) in einer den Einlass (56) des Ablasskanals (54) verschließenden Stellung mit einer Federkraft des Federelements (46) beaufschlagt ist.

3. Ölfilter nach Anspruch 1 oder 2,
**dadurch gekennzeichnet, dass**
das Verschlusselement (44) wenigstens ein zum Abdichten des Einlasses (56) des Ablasskanals (54) ausgebildetes Dichtelement (50, 52) aufweist.

4. Ölfilter nach einem der Ansprüche 1 bis 3,
**dadurch gekennzeichnet, dass**
das Ölfiltergehäuse (14) den Ablasskanal (54) aufweist, wobei der Einlass (56) des Ablasskanals (54) mittels des relativ zu der ersten Endplatte (26) der Filterkartusche (12) in die axiale Richtung (36) der Filterkartusche (12) verschiebbaren Verschlusselements (44) verschlossen ist, wenn sich die Filterkartusche (12) in der ersten Position oder in der zweiten Position befindet.

5. Ölfilter nach Anspruch 2 oder nach einem der Ansprüche 3 bis 4 in dessen Rückbezug auf Anspruch 2,
**dadurch gekennzeichnet, dass**
in einer dritten Position der Filterkartusche (12), in welcher die Filterkartusche (12) bezogen auf die zweite Position weiter in die axiale Richtung (36) der Filterkartusche (12) verschoben ist, die erste Endplatte (26) an einem oberen Ende (108) des Verschlusselements (44) anliegt, wobei das Federelement (46) maximal weit zusammengedrückt ist.

6. Ölfilter nach einem der Ansprüche 1 bis 5,
**dadurch gekennzeichnet, dass**
das Ölfiltergehäuse (14) eine rohrförmige Aufnahme (60) aufweist, in welcher ein die zumindest eine Durchtrittsöffnung (34) aufweisender erster Bereich (30) des Kanals (20) der Filterkartusche (12) aufgenommen ist, wenn die Filterkartusche (12) in die erste Position oder in die zweite Position verbracht ist, wobei der erste Bereich (30) des Kanals (20) zumindest in der ersten Position und in der zweiten Position der Filterkartusche (12) an einer Verschlusseinrichtung (70) anliegt, welche, insbesondere gegen die Federkraft eines Federelements (72), durch Verschieben der Filterkartusche (12) aus der ersten Position in die zweite Position von der rohrförmigen Aufnahme (60) weg bewegbar ist, um den Einlass in den auf Seiten des Ölfiltergehäuses (14) vorgesehenen Kanal (76) freizugeben.

7. Ölfilter nach Anspruch 6,
**dadurch gekennzeichnet, dass**
das Ölfiltergehäuse (14) einen Anschlag für ein Federelement (62) aufweist, welches bei einem Verbringen der Filterkartusche (12) in eine dritte Position, in welcher die Filterkartusche (12) bezogen auf die zweite Position weiter in die axiale Richtung (36) der Filterkartusche (12) verschoben ist, eine entgegen der Verschieberichtung wirkende Federkraft auf die Filterkartusche (12) ausübt, wobei durch ein Wegbewegen der rohrförmigen Aufnahme (60) von einer Wandung (66) des Ölfiltergehäuses (14) ein Einlass für ungefiltertes Öl in einen Kanal (110, 92) freigebbar ist.

8. Ölfilter nach einem der Ansprüche 1 bis 6,
**dadurch gekennzeichnet, dass**
das Ölfiltergehäuse (14) einen Anschlag für ein Federelement (62) aufweist, welches bei einem Verbringen der Filterkartusche (12) in eine dritte Position, in welcher die Filterkartusche (12) bezogen auf die zweite Position weiter in die axiale Richtung (36) der Filterkartusche (12) verschoben ist, eine entgegen der Verschieberichtung wirkende Federkraft auf die Filterkartusche (12) ausübt, wobei durch ein Herausbewegen eines zweiten, wenigstens eine weitere Durchtrittsöffnung (126) aufweisenden Bereichs (120) des Kanals (20) der Filterkartusche (12) aus einer auf Seiten des Deckelelements (18) bereitgestellten weiteren rohrförmigen, insbesondere eine Einströmöffnung (138) für ungefiltertes Öl aufweisenden, Aufnahme (130) für den zweiten Bereich (120) des Kanals (20) ein Einlass für ungefiltertes Öl in einen Kanal (110, 92) freigebbar ist.

9. Filterkartusche zum Einsetzen in ein Ölfiltergehäuse (14) eines Ölfilters (10) nach einem der Ansprüche 1 bis 7, mit einer ersten - unteren - und einer zweiten - oberen - Endplatte (26, 28) sowie einem Kanal (20) für gefiltertes Öl, welcher in radialer Richtung zumindest bereichsweise von Filtermaterial (22) umgeben ist,
wobei in einer Wandung (32) des Kanals (20) in einem als rohrförmiger Stutzen an die untere Endplatte (26) anschließenden Bereich (30) zumindest eine Durchtrittsöffnung (34) ausgebildet ist,
**dadurch gekennzeichnet, dass** von der unteren Endplatte(26) eine hülsenförmige Wandung (42) in axialer Richtung (36) absteht, entlang welcher ein als Verschlusselement dienendes Hülsenelement (44) zum Verschließen eines ringförmigen Einlass (56) eines Ablaufkanals (54) im Ölfiltergehäuse (14) axial verschiebbar geführt ist,
wobei durch Druck auf die obere Endplatte (28) in Richtung der unteren Endplatte (26) der die zumindest eine Durchtrittsöffnung (34) aufweisende erste Bereich (30) des Kanals (20) der Filterkartusche (12) in die axiale Richtung (36) verschiebbar ist, bis ein oberes Ende (108) des Hülsenelements (44) mit der unteren Endplatte (26) in Anlage kommt,
wodurch bei im Ölfiltergehäuse (14) eingebauten Zustand der Filterkartusche (12) vermittels im Betrieb des Ölfilters (10) hervorgerufener Druckdifferenzen zwischen gefiltertem und ungefiltertem Öl Ventilfunktionen des Ölfilters (10) bewirkbar sind.

10. Filterkartusche nach Anspruch 9,
**dadurch gekennzeichnet, dass**
an der Filterkartusche (12) ein Federelement (46) angeordnet ist, mittels welchem das als Verschlusselement dienende Hülsenelement (44) in einer den Einlass (56) des Ablasskanals (54) verschließenden Stellung mit einer Federkraft des Federelements (46) beaufschlagbar ist.

11. Filterkartusche nach Anspruch 10, zum Einsetzen in ein Ölfiltergehäuse (14) eines Ölfilters (10) nach Anspruch 8 oder 9,
**dadurch gekennzeichnet, dass**
die Filterkartusche (12) einen zweiten, wenigstens eine weitere Durchtrittsöffnung (126) aufweisenden Bereich (120) des Kanals (20) aufweist.

## Claims

1. Oil filter for a motor vehicle, with a filter cartridge (12) located in an oil filter housing (14) of the oil filter (10), wherein the oil filter housing (14) comprises a base body (16) and a cover element (18), wherein the filter cartridge (12) has a first - lower-and a second - upper - end plate (26, 28) and a passage (20) for filtered oil, which is surrounded by a filter material (22) of the filter cartridge (12) in the radial direction at least in certain areas, wherein at least one through-opening (34) is formed in a wall (32) of the passage (20) in a region (30) adjoining the lower end plate (26) as a tubular connector, wherein the filter cartridge (12) can be moved in the closed oil filter housing (14), in which the cover element (18) is mounted on the base body (16), from a first position in which an entry of filtered oil via the at least one through-opening (34) into a passage (76) for filtered oil provided on the side of the oil filter housing (14) is prevented into a second position in which the filter cartridge (12) is displaced in an axial direction (36) of the filter cartridge (12) with respect to the first position and in which an inlet into the passage (76) provided on the side of the oil filter housing (14) is fluidically connected to the at least one through-opening (34), **characterised in that**
from the lower end plate (26) of the filter cartridge (12) a sleeve-shaped wall (42) projects in the axial direction (36), along which wall (34) a sleeve element (44) serving as a closing element is guided in the oil filter housing (14) in an axially displaceable manner, by means of which sleeve element (44) an annular inlet (56) of a discharge passage (54) for discharging the oil from a reception region of the oil filter housing (14) for the filter cartridge (12) can be closed, wherein the annular inlet (56) of the discharge passage (54) can be released by moving the filter cartridge (12) into a removal position of the filter cartridge (12), in which the filter cartridge (12) is moved from the first position in a direction counter to the second position.

2. Oil filter according to claim 1,
**characterised in that**
a spring element (46), which is formed from a plastic material in particular and by means of which a spring force of the spring element (46) is applied to the closing element (44) in a position closing the inlet (56) of the discharge passage (54), is located at the filter cartridge (12).

3. Oil filter according to claim 1 or 2,
**characterised in that**
the closing element (44) has at least one sealing element (50, 52) designed for sealing the inlet (56) of the discharge passage (54).

4. Oil filter according to any of claims 1 to 3,
**characterised in that**
the oil filter housing (14) has the discharge passage (54), wherein the inlet (56) of the discharge passage (54) is closed by means of the closing element (44) displaceable relative to the first end plate (26) of the filter cartridge (12) in the axial direction (36) of the filter cartridge (12) if the filter cartridge (12) is in the first position or in the second position.

5. Oil filter according to claim 2 or to any of claims 3 to 4 with reference to claim 2, **characterised in that**
in a third position of the filter cartridge (12), in which the filter cartridge (12) has been displaced further in the axial direction (36) of the filter cartridge (12) with respect to the second position, the first end plate (26) bears against an upper end (108) of the closing element (44), the spring element (46) being compressed to its maximum extent.

6. Oil filter according to any of claims 1 to 5,
**characterised in that**
the oil filter housing (14) has a tubular receptacle (60), in which a first region (30) of the passage (20) of the filter cartridge (12) having the at least one through-opening (34) is accommodated if the filter cartridge (12) has been moved into the first position or into the second position, wherein the first region (30) of the passage (20) bears at least in the first position and in the second position against a closing device (70), which, in particular against the spring force of a spring element (72), can be moved away from the tubular receptacle (60) by displacing the filter cartridge (12) from the first position into the second position, in order to open up the inlet into the passage (76) on the side of the oil filter housing (14)

7. Oil filter according to claim 6,
**characterised in that**
the oil filter housing (14) has a stop for a spring element (62), which applies a spring force acting against the displacement direction to the filter cartridge (12) at a movement of the filter cartridge (12) into a third position in which the filter cartridge (12) has been displaced further in the axial direction (36) of the filter cartridge (12) with respect to the second position, wherein an inlet for unfiltered oil into a passage (110, 92) can be opened up by moving the tubular receptacle (60) away from a wall (66) of the oil filter housing (14).

8. Oil filter according to any of claims 1 to 6,
**characterised in that**
the oil filter housing (14) has a stop for a spring element (62), which applies a spring force acting against the displacement direction to the filter cartridge (12) at a movement of the filter cartridge (12) into a third position in which the filter cartridge (12) has been displaced further in the axial direction (36) of the filter cartridge (12) with respect to the second position, wherein an inlet for unfiltered oil into a passage (110, 92) can be opened up by moving out a second region (120) of the passage (20) of the filter cartridge (12) having at least one further through-opening (126) from a further tubular receptacle (130) provided on the side of the cover element (18), in particular having an inflow opening (138) for unfiltered oil, for the second region (120) of the passage (20).

9. Filter cartridge for installation into an oil filter housing (14) of an oil filter (10) according to any of claims 1 to 7, having a first - lower - and a second - upper - end plate (26, 28) and a passage (20) for filtered oil, which is surrounded by filter material (22) at least in certain areas, wherein at least one through-opening (34) is formed in a wall (32) of the passage (20) in a region (30) adjoining the lower end plate (26) as a tubular connector,
**characterised in that**
from the lower end plate (26) a sleeve-shaped wall (42) projects in the axial direction (36), along which wall (42) a sleeve element (44) serving as a closing element is guided in the oil filter housing (14) in an axially displaceable manner for closing an annular inlet (56) of a discharge passage (54), wherein, by applying pressure to the upper end plate (28) in the direction of the lower end plate (26), the first region (30) - having the at least one through-opening (34) - of the passage (20) of the filter cartridge (12) can be displaced in the axial direction (36) until an upper end (108) of the sleeve element (44) comes to bear against the lower end plate (26), whereby, when the filter cartridge (12) is installed into the oil filter housing (14), valve functions of the oil filter (1) can be effected by means of pressure differentials induced in the operation of the oil filter (1) between filtered and unfiltered oil.

10. Filter cartridge according to claim 9,
**characterised in that**
a spring element (46), by means of which a spring force of the spring element (46) can be applied to a sleeve element (44) serving as closing element in a position closing the inlet (56) of the discharge passage (54), is located at the filter cartridge (12).

11. Filter cartridge according to claim 10 for installation into an oil filter housing (14) of an oil filter (10) according to claim 8 or 9,
**characterised in that**
the filter cartridge (12) has a second region (120) of the passage (20) having at least one further through-opening (126).

## Revendications

1. Filtre à huile pour un véhicule automobile, comprenant une cartouche de filtre (12) qui est disposée dans un carter (14) de filtre à huile (10), le carter de filtre à huile (14) comprenant un corps de base (16) et un élément couvercle (18), la cartouche de filtre (12) comportant des première et seconde plaques d'extrémité (26, 28) inférieure et supérieure ainsi qu'un canal (20) pour l'huile filtrée, qui est entouré au moins à certains endroits par un matériau de filtre (22) de la cartouche de filtre (12) dans la direction radiale,
dans une paroi (32) du canal (20) étant formée au moins un trou traversant (34) en forme de tube dans une zone (30) adjacente à la plaque d'extrémité inférieure (26), la cartouche de filtre (12) dans le carter de filtre à huile (14) fermé, au niveau duquel l'élément couvercle (18) est monté sur le corps de base (16), peut être déplacée d'une première position, dans laquelle une entrée de l'huile filtrée à travers ledit trou traversant (34) est bloquée dans un canal (76) disposé sur les côtés du carter de filtre à huile (14) pour l'huile filtrée, à une deuxième position, dans laquelle la cartouche de filtre (12) est déplacée par rapport à la première position dans une direction axiale (36) de la cartouche de filtre (12) et dans laquelle une amenée dans le canal (76) disposé sur les côtés du carter de filtre à huile (14) est en communication fluidique avec ledit trou traversant (34), et **caractérisé en ce que** depuis la plaque d'extrémité inférieure (26) de la cartouche de filtre (12) s'étend une paroi (42) en forme de manchon dans la direction axiale (36), le long de laquelle un élément manchon (44) servant d'élément de fermeture est guidé axialement par coulissement, qui permet de fermer une amenée annulaire (56) d'un canal de sortie (54) pour faire sortir d'huile de la zone de réception du carter de filtre à huile (14) pour la cartouche de filtre (12), l'amenée annulaire (56) du canal de sortie (54) pouvant être libérée en mettant la cartouche de filtre (12) dans une position de démontage de la cartouche de filtre (12) dans laquelle la cartouche de filtre (12) est déplacée depuis la première position dans une direction opposée à la deuxième position.

2. Filtre à huile selon la revendication 1, **caractérisé en ce que** sur la cartouche de filtre (12) est disposé un élément ressort (46) constitué notamment à partir d'une matière plastique, au moyen duquel l'élément de fermeture (44) dans une position fermant l'amenée (56) du canal de sortie (54) est soumis à une force de l'élément ressort (46).

3. Filtre à huile selon la revendication 1 ou 2, **caractérisé en ce que** l'élément de fermeture (44) présente au moins un élément d'étanchéité formé pour rendre étanche l'amenée (56) du canal de sortie (54).

4. Filtre à huile selon l'une des revendications 1 à 3, **caractérisé en ce que** le carter de filtre à huile (14) présente le canal de sortie (54), l'amenée (56) du canal de sotie (54) étant fermée par l'élément de fermeture mobile par rapport à la première plaque d'extrémité (26) de la cartouche de filtre (12) dans la direction axiale (36) de la cartouche de filtre (12), lorsque la cartouche de filtre (12) se trouve dans la première position ou dans la deuxième position.

5. Filtre à huile selon la revendication 2 ou selon l'une des revendications 3 à 4 lorsqu'elle dépend de la revendication 2,
**caractérisé en ce que** dans une troisième position du cartouche de filtre (12), dans laquelle est déplacée la cartouche de filtre (12) par rapport à la deuxième position davantage dans la direction axiale (36) de la cartouche de filtre (12), la première plaque d'extrémité (26) se situe sur une extrémité supérieure (108) de l'élément de fermeture (44), l'élément ressort (46) étant compressé au maximum.

6. Filtre à huile selon l'une des revendications 1 à 5,
**caractérisé en ce que** le carter de filtre à huile (14) présente un logement tubulaire (60) dans lequel est logée une première zone (3) du canal (20) de la cartouche de filtre (12) présentant ledit trou traversant (34), lorsque la cartouche de filtre (12) est amenée dans la première position ou dans la deuxième position, la première zone (30) du canal au moins dans la première position et dans la deuxième position de la cartouche de filtre (12) se situant sur un dispositif de fermeture (70), qui, notamment contre la force d'un élément de ressort (72) peut se déplacer par coulissement de la cartouche de filtre (12) de la première position à la deuxième position à partir du logement tubulaire (60) pour libérer l'amenée dans le canal (76) prévu sur les côtés du carter de filtre à huile (14).

7. Filtre à huile selon la revendication 6, **caractérisé en ce que** le carter de filtre à huile (14) présente une butée pour un élément ressort (62), qui, lorsque la cartouche de filtre (12) est amenée dans une troisième position, dans laquelle la cartouche de filtre (12) par rapport à la deuxième position est poussée davantage dans la direction axiale (36) de la cartouche de filtre (12), une force de ressort agissant à l'encontre de la direction de déplacement s'exerce sur la cartouche de filtre (12), lorsque le logement tubulaire (60) s'écarte d'une paroi (66) du carter de filtre à huile (14), une amenée pour l'huile non filtrée est libérable dans un canal (110, 92).

8. Filtre à huile selon l'une des revendications 1 à 6, **caractérisé en ce que** le carter de filtre à huile (14) présente une butée pour un élément ressort (62), ledit ressort, lorsque la cartouche de filtre (12) est amenée dans une troisième position, dans laquelle la cartouche de filtre est poussée (12) par rapport à la deuxième position davantage dans la direction axiale (36) de la cartouche de filtre (12), exerce une force de ressort agissant contre la direction de déplacement sur la cartouche de filtre (12), l' extraction d'une seconde zone (120) du canal (20) de la cartouche de filtre (12) présentant un autre trou traversant (126) à partir d'un logement (130) présentant notamment un orifice d'admission (138) pour l'huile non filtrée en forme tubulaire sur les côtés de l'élément couvercle (18) pour la seconde zone (120) du canal (20) permettant de libérer une amenée pour l'huile non filtre dans un canal (110, 92).

9. Cartouche de filtre à insérer dans un carter de filtre à huile (14) d'un filtre à huile (10) selon l'une des revendications 1 à 7, comportant des première et seconde plaques d'extrémité (26, 28) inférieure et supérieure ainsi qu'un canal (20) pour l'huile filtrée, qui est entouré au moins à certains endroits par un matériau de filtre (22) dans la direction radiale,
dans une paroi (32) du canal (20) étant formée au moins un trou traversant (34) en forme de tube dans une zone (30) adjacente à la plaque d'extrémité inférieure (26),
**caractérisée en ce que**
depuis la plaque d'extrémité inférieure (26) s'étend une paroi (42) en forme de manchon dans la direction axiale (36), le long de laquelle un élément manchon (44) servant d'élément de fermeture est guidé axialement par coulissement, qui permet de fermer une amenée annulaire (56) d'un canal de sortie (54) dans le carter de filtre à huile (14),
par pression sur la plaque d'extrémité supérieure (28) dans la direction de la plaque d'extrémité inférieure (26) la première zone (30) présentant ledit trou traversant (34) du canal (20) de la cartouche de filtre (12) peut être déplacée dans la direction axiale (36), jusqu'à ce qu'une extrémité supérieure (108) de l'élément manchon (44) vienne en appui avec la plaque d'extrémité supérieure (26),
lorsque la cartouche de filtre (12) est montée dans le carter de filtre à huile (14) au moyen de différences de pression provoquées par le fonctionnement du filtre à huile (10) entre l'huile filtre et non filtrée des fonctions de soupape du filtre à huile (10) peuvent être activées.

10. Cartouche de filtre selon la revendication 9,
**caractérisée en ce que** sur la cartouche de filtre (12) est disposé un élément ressort (46) au moyen duquel l'élément manchon (44) servant d'élément de fermeture dans une position fermant l'amenée (56) du canal de sortie (54) est soumis à une force de ressort de l'élément de ressort (46).

11. Cartouche de filtre selon la revendication 10, à insérer dans un carter de filtre à huile (14) d'un filtre à huile (10) selon la revendication 8 ou 9,
**caractérisée en ce que** la cartouche de filtre (12) présente une seconde zone (120) du canal (20) comportant au moins un autre trou traversant (126).
